# EUROPÄISCHE PATENTSCHRIFT

(11) **EP 4 428 330 B1**
(45) Veröffentlichungstag und Bekanntmachung des Hinweises auf die Patenterteilung: **01.10.2025**
(21) Anmeldenummer: 24161355.3
(22) Anmeldetag: 05.03.2024
(51) Int. Cl.: E05D 15/06

(54) **PROFILSCHIENE FÜR EINE TÜRFÜHRUNG EINES FAHRZEUGES**
PROFILE RAIL FOR A DOOR GUIDE OF A VEHICLE
RAIL PROFILÉ POUR UN GUIDAGE DE PORTE D'UN VÉHICULE

(30) Priorität: 06.03.2023 DE 202023101053 U
(43) Veröffentlichungstag der Anmeldung: 11.09.2024
(73) Patentinhaber: Edscha Engineering GmbH, 42855 Remscheid (DE)
(72) Erfinder: PRISON, Stefan, 42855 Remscheid (DE); WEISS, Thorsten, 42855 Remscheid (DE)
(74) Vertreter: IPrime Bonnekamp Sparing Patentanwaltsgesellschaft mbH

(56) Entgegenhaltungen:
- JP-B2- 6 873 828
- US-B2- 6 779 832

## Beschreibung

Die Erfindung betrifft eine Profilschiene für eine Türführung eines Fahrzeuges.

Aus der Praxis sind Türführungen für Fahrzeuge bekannt, die mit Schiebetüren für den Ein- und Ausstieg von Personen ausgestattet sind. Diese Schiebetüren werden oftmals mit geeigneten Führungs- bzw. Halteeinrichtungen in einer einteiligen Führungsschiene geführt, welche an der Fahrzeugkarosserie befestigt sind. Insbesondere ein gebogener Krümmungsabschnitt einer einteiligen Profilschiene bzw. Führungsschiene stellt Probleme für Führungsmittel, wie etwa Rollen eines Rollenwagens einer Tür dar, da sich Bereiche des Krümmungsabschnittes hinsichtlich der Herstellung, z. B. beim Streckbiegen der Profilschiene, einschnüren bzw. aufbiegen können, sodass bisher mit sehr hohen Fertigungstoleranzen gearbeitet werden musste, um einen einigermaßen reibungslosen Lauf der Führungsmittel, insbesondere im Krümmungsabschnitt der Profilschiene, gewährleisten zu können.

JP 6 873828 B2 zeigt eine Profilschiene für eine Türführung eines Fahrzeuges, umfassend ein erstes Profilschienenstück mit einer ersten Stirnseite und mit einer zweiten Stirnseite, und ein Verbindungsstück, wobei das Verbindungsstück ein erstes Ende und ein zweites Ende aufweist, wobei das erste Ende des Verbindungsstücks einen ersten stirnseitigen Anschlussbereich zum Verbinden mit dem ersten Profilschienenstück aufweist, wobei das Verbindungsstück als ein separates Profilschienenstück ausgebildet ist, und wobei das Verbindungsstück über den ersten stirnseitigen Anschlussbereich mit zumindest einer Stirnseite des ersten Profilschienenstücks mittels eines Stecksystems verbindbar ist.

US 6 779 832 B2 zeigt eine Profilschiene für eine Türführung eines Fahrzeuges, umfassend ein erstes Profilschienenstück mit einer ersten Stirnseite und mit einer zweiten Stirnseite. In die Profilschiene sind Mittel zum Führen und zum Tragen einer Fahrzeugtür einsetzbar sowie entlang der Profilschiene verlagerbar.

CN 108661476 B zeigt eine Profilschiene für eine Türführung eines Fahrzeuges, umfassend ein erstes Profilschienenstück mit einer ersten Stirnseite und mit einer zweiten Stirnseite sowie ein Verbindungsstück, wobei das Verbindungsstück ein erstes Ende und ein zweites Ende aufweist. Hierbei weist das erste Ende des Verbindungsstücks einen ersten stirnseitigen Anschlussbereich zum Stoß an Stoß Anordnen mit der ersten Stirnseite des ersten Profilschienenstücks auf, wobei das Profilschienenstück und das Verbindungsstück Langlöcher umfassen, sodass das Profilschienenstück und das Verbindungsstück über eine Schraubverbindung auf einer Oberfläche befestigbar sind. Alternativ sind das Profilschienenstück und das Verbindungsstück miteinander verschweißt.

DE 10 2008 021 802 A1 zeigt eine Türführung eines Fahrzeuges mit einer entlang ihrer Längserstreckung zweigeteilten Profilschiene, die eine untere und eine obere Führungsschiene umfasst, wobei die untere und die obere Führungsschiene miteinander durch Vernieten verbunden sind. Die obere Führungsschiene der Profilschiene ist einerseits ein Tiefziehbauteil, und die untere Führungsschiene der Profilschiene ist andererseits ein Roll- und Streckbiegebauteil. In die Profilschiene sind Mittel zum Führen und zum Tragen einer Fahrzeugtür einsetzbar sowie entlang der Profilschiene verlagerbar. Nachteilig ist, dass die vorstehende Profilschiene zwar aus zumindest zwei zu verbindenden Bauteilen besteht, nämlich einer oberen Führungsschiene und einer unteren Führungsschiene. Im Endeffekt entspricht die zusammengesetzte Profilschiene einem einteiligen Bauteil, da diese entlang ihrer Längsrichtung zweigeteilt ist. Insbesondere gekrümmte Profilschienen, die einem Aufbau der vorstehenden Profilschiene entsprechen, können hohe Abmaße u. a. aufgrund der unterschiedlichen Fertigungsmethoden bezüglich der oberen und der unteren Führungsschiene aufweisen. Ferner können auch Wärmeausdehnungen und/oder Wärmeschrumpfungen durch Temperaturänderungen dazu führen, dass unerwünschte Abmaße hinsichtlich der zu montierenden Profilschiene auftreten. Infolgedessen ist es fertigungstechnisch schwierig, bestimmte Fertigungstoleranzen einzuhalten, wonach eine reproduzierbare Endmontage der Profilschiene an einem Fahrzeug deutlich erschwert wird, da die Profilschiene mit der Karosserie sowie mit weiteren Komponenten in nachfolgenden Montageschritten zusammengesetzt wird. Darüber hinaus besteht die Gefahr, dass zwischen den Führungsmitteln und der Profilschiene geforderte Einbautoleranzen nicht eingehalten werden können, sodass es während des Öffnens und/oder des Schließens einer Schiebetür zu einem unruhigen Lauf der Tür sowie zu störenden Geräuschen kommen kann.

DE 20 2010 010 125 U1 zeigt eine Verbindung für zumindest zwei Profilschienenstücke. Die Verbindung umfasst ein erstes Profilschienenstück, ein zweites Profilschienenstück sowie ein aus Kunststoff hergestelltes Verbindungsstück. Um eine kraft- und formschlüssige Verbindung der beiden Profilschienenstücke zu gewährleisten, ist das Verbindungsstück mit dem ersten Profilschienenstück und mit dem zweiten Profilschienenstück verklebt. Hierbei sind das erste Profilschienenstück und das zweite Profilschienenstück derart angeordnet, dass ein erster stirnseitiger Endbereich des ersten Profilschienenstücks und ein zweiter stirnseitiger Endbereich des zweiten Profilschienenstücks aneinanderstoßen. Des Weiteren weist das Verbindungsstück auf einer Unterseite eine Klebstoff-Beschichtung auf, die zusätzlich mit einer Abziehfolie ausgestattet ist. Für eine Verbindung der beiden Profilschienenstücke ist das Verbindungsstück sowohl klebend auf einer ersten Oberfläche des ersten Profilschienenstücks als auch klebend auf einer zweiten Oberfläche des zweiten Profilschienenstücks angeordnet.

US 2017 021 13 06 A1 zeigt eine einteilige Profilschiene für eine Türführung eines Fahrzeuges, umfassend ein erstes Profilschienenstück mit einer ersten Stirnseite und mit einer zweiten Stirnseite sowie ein Verbindungsstück, wobei das Verbindungsstück ein erstes Ende und ein zweites Ende aufweist. Hierbei ist das Verbindungsstück als ein Zwischenelement ausgebildet, um einen bestimmten Abstand zwischen einer Fahrzeugkarosserie und dem Profilschienenstück einzustellen. Hierbei ist das Verbindungsstück zwischen der Fahrzeugkarosserie und dem Profilschienenstück angeordnet. Ferner ist das Verbindungsstück im Wesentlichen parallel bezüglich des Profilschienenstückes ausgerichtet.

DE 10 2009 033 136 A1 zeigt eine Profilschiene, wobei die Profilschiene Kunststoffbauteile umfasst, wobei die Kunststoffbauteile aus einem strahlenvernetzten Kunststoffmaterial hergestellt sind.

Es ist die Aufgabe der Erfindung, eine Profilschiene für eine Türführung eines Fahrzeuges zu schaffen, welche montagefreundlich und zuverlässig ist sowie einen geräuscharmen Betrieb ermöglicht.

Diese Aufgabe wird erfindungsgemäß durch eine Profilschiene mit den Merkmalen des unabhängigen Anspruchs 1 gelöst.

Gemäß der Erfindung ist eine Profilschiene für eine Türführung eines Fahrzeuges geschaffen, umfassend ein erstes Profilschienenstück mit einer ersten Stirnseite und mit einer zweiten Stirnseite, und ein Verbindungsstück, wobei das Verbindungsstück ein erstes Ende und ein zweites Ende aufweist, wobei das erste Ende des Verbindungsstücks einen ersten stirnseitigen Anschlussbereich zum Verbinden mit dem ersten Profilschienenstück aufweist, wobei das Verbindungsstück als ein separates Profilschienenstück ausgebildet ist, und wobei das Verbindungsstück über den ersten stirnseitigen Anschlussbereich mit zumindest einer Stirnseite des ersten Profilschienenstücks mittels eines Stecksystems verbindbar ist. Die Profilschiene zeichnet sich dadurch aus, dass das Verbindungsstück ein oberes Verbindungsstückteil und ein unteres Verbindungsstückteil umfasst, und dass das obere Verbindungsstückteil und das untere Verbindungsstückteil entlang einer bezüglich des ersten stirnseitigen Anschlussbereiches zumindest abschnittweise quer verlaufenden Verbindungslinie miteinander verbindbar sind. Vorteilhaft wird eine Flexibilität einer Montage mittels eines zweiteiligen Verbindungsstücks erhöht, um etwaige Fertigungstoleranzen auszugleichen.

Gemäß einem Aspekt ist eine Profilschiene für eine Türführung eines Fahrzeuges geschaffen. Die Profilschiene umfasst ein erstes Profilschienenstück mit einer ersten Stirnseite und mit einer zweiten Stirnseite. Weiter umfasst die Profilschiene ein Verbindungsstück, welches ein erstes Ende und ein zweites Ende aufweist. Hierbei weist das erste Ende des Verbindungsstücks einen ersten stirnseitigen Anschlussbereich zum Verbinden mit dem ersten Profilschienenstück auf, wobei das Verbindungsstück als ein separates Profilschienenstück ausgebildet ist, und wobei das Verbindungsstück über den ersten stirnseitigen Anschlussbereich mit zumindest einer Stirnseite des ersten Profilschienenstücks mittels eines Stecksystems verbindbar ist. Ein Vorteil bezüglich einer Profilschiene, die mehrere miteinander verbundene Profilschienenstücke aufweist, liegt in der standardisierten Modulbauweise, sodass für jeden bestimmten Abschnitt der Profilschiene ein exakt definiertes Bauteil zum Einsatz kommt. Hierdurch wird stets eine hohe Qualität aufgrund der Einhaltung von Fertigungs- und Einbautoleranzen gewährleistet, wobei gleichzeitig eine erhöhte Flexibilität während einer Montage vorhanden ist. Die Profilschiene kann vorteilhaft hierfür maßgefertigte Einzelteile umfassen, die mittels eines intuitiven Stecksystems miteinander verbunden werden können, sodass eine Profilschiene mit einer bestimmten Länge und mit einem bestimmten Verlauf zur Verfügung gestellt werden kann. Vorteilhaft können bereits während der Montage etwaige Ungenauigkeiten, z. B. aufgrund von nicht eingehaltenen Fertigungstoleranzen oder möglichen thermischen Längenänderungen, ausgeglichen werden. Ferner ist es vorteilhaft möglich aufgrund eines Baukastensystems eine individuelle Profilschiene zügig und effizient herzustellen, sodass auch unterschiedliche Fahrzeuge mit individuellen Profilschienen für Türführungen bezüglich der Länge und des Verlaufs mittels der vorstehenden Profilschienenstücke ausgestattet werden können. Um die Montage zu vereinfachen, werden die einzelnen Profilschienenstücke intuitiv über ein Stecksystem miteinander verbunden. Vorteilhaft werden dadurch die Montagefreundlichkeit erhöht, der Bedarf an Werkzeug auf ein Minimum reduziert sowie enge Fertigungstoleranzen eingehalten. Ein Stecksystem bietet weiter den Vorteil, dass eine Profilschiene jederzeit wieder auseinandergebaut oder erweitert werden kann, um beispielsweise die Profilschiene bezüglich ihrer Länge und bezüglich ihres Verlaufs variabel anzupassen. Des Weiteren wird vorteilhaft Ausschussware durch Fehlproduktion einer Profilschiene vermieden, da die einzelnen standardisierten Profilschienenstücke lösbar verbindbar sind und dementsprechend in anderen Profilschienen zum Einsatz kommen. Ein weiterer Vorteil eines Stecksystems für eine Türführung ist, dass, falls ein Abschnitt der Profilschiene beschädigt ist, z. B. als Folge einer Kollision, nicht zwingend die ganze Profilschiene ausgetauscht werden muss, sondern es wird lediglich der defekte Abschnitt durch ein intaktes Profilschienenstück ersetzt.

Gemäß einem Aspekt ist eine Profilschiene für eine Türführung eines Fahrzeuges geschaffen, umfassend ein erstes Profilschienenstück mit einer ersten Stirnseite und mit einer zweiten Stirnseite, und ein Verbindungsstück, wobei das Verbindungsstück ein erstes Ende und ein zweites Ende aufweist, wobei das erste Ende des Verbindungsstücks einen ersten stirnseitigen Anschlussbereich zum Verbinden mit dem ersten Profilschienenstück aufweist, wobei das Verbindungsstück als ein separates Profilschienenstück ausgebildet ist, und wobei das Verbindungsstück über den ersten stirnseitigen Anschlussbereich mit zumindest einer Stirnseite des ersten Profilschienenstücks mittels eines Stecksystems verbindbar ist, wobei der erste stirnseitige Anschlussbereich in einer ersten Anschlussebene angeordnet ist, die einen ersten Winkel zu einer ersten, zu einer Erstreckung des Verbindungsstücks normalen Ebene aufweist. Vorteilhaft verbessert ein schräger erster Anschlussbereich des Verbindungsstücks und eine komplementäre schräge erste Stirnseite des ersten Profilschienenstücks ein Zusammenstecken des Verbindungsstücks und des ersten Profilschienenstücks, da eine Kontaktierung zwischen dem ersten Anschlussbereich des Verbindungsstücks und der ersten Stirnseite des ersten Profilschienenstücks nahezu spaltfrei ist. Des Weiteren werden Laufrolleneigenschaften einer Tragrolle der Türführung vorteilhaft begünstigt, da die Tragrolle an einem Übergang von Verbindungsstück und erstes Profilschienenstück durch eine nahezu spaltfreie und stufenlose Ausführung des Übergangs ruckfrei und laufruhig verlagert wird, wobei eine Verlagerungsrichtung der Tragrolle unter einem Winkel kleiner 90° auf einen Spalt trifft.

Gemäß einem Aspekt ist eine Profilschiene für eine Türführung eines Fahrzeuges geschaffen, umfassend ein erstes Profilschienenstück mit einer ersten Stirnseite und mit einer zweiten Stirnseite, und ein Verbindungsstück, wobei das Verbindungsstück ein erstes Ende und ein zweites Ende aufweist, wobei das erste Ende des Verbindungsstücks einen ersten stirnseitigen Anschlussbereich zum Verbinden mit dem ersten Profilschienenstück aufweist, wobei das Verbindungsstück als ein separates Profilschienenstück ausgebildet ist, und wobei das Verbindungsstück über den ersten stirnseitigen Anschlussbereich mit zumindest einer Stirnseite des ersten Profilschienenstücks mittels eines Stecksystems verbindbar ist, wobei das erste Profilschienenstück auf einer dem Fahrzeug zugekehrten Seite eine zumindest abschnittsweise durchgehende Hohlkammer aufweist, dass in der Hohlkammer eine Schlitzausnehmung ausgebildet ist, und dass ein Gewindebolzen mit einem Kopfstück in die Hohlkammer einsetzbar ist. Vorteilhaft ist die Profilschiene mittels eines verdeckten Verbindungsmittels an eine Fahrzeugkarosserie des Fahrzeugs anschließbar, sodass für einen Betrachter von außen keine störenden Elemente z.B. Schrauben erkennbar sind, und dass vorteilhaft eine mögliche Korrosionsquelle ausgeschaltet wird. Ein weiterer Vorteil ist, dass die Verbindungsmittel innerhalb der Hohlkammer verlagerbar sind, sodass eine Montage der Profilschiene an die Fahrzeugkarosserie vereinfacht wird, indem Fertigungstoleranzen mittels einer Verlagerung des Verbindungsmittels ausgeglichen werden können.

Gemäß einem Aspekt ist eine Profilschiene für eine Türführung eines Fahrzeuges geschaffen, umfassend ein erstes Profilschienenstück mit einer ersten Stirnseite und mit einer zweiten Stirnseite, und ein Verbindungsstück, wobei das Verbindungsstück ein erstes Ende und ein zweites Ende aufweist, wobei das erste Ende des Verbindungsstücks einen ersten stirnseitigen Anschlussbereich zum Verbinden mit dem ersten Profilschienenstück aufweist, wobei das Verbindungsstück als ein separates Profilschienenstück ausgebildet ist, und wobei das Verbindungsstück über den ersten stirnseitigen Anschlussbereich mit zumindest einer Stirnseite des ersten Profilschienenstücks mittels eines Stecksystems verbindbar ist, wobei das Verbindungsstück zumindest ein Rastelement mit einer nachgiebigen, elastischen Rastnase aufweist, und dass die Rastnase des Verbindungsstücks mit einem als eine Ausnehmung ausgebildeten Gegenrastelement des ersten Profilschienenstücks ver- und entriegelbar ist. Vorteilhaft wird das Verbindungsstück einfach und schnell mit dem ersten Profilschienenstück zusammengesteckt, wobei eine sofortige Verriegelung erfolgt, wobei auf weitere Verbindungsmittel verzichtet werden kann, sodass eine Montage intuitiv, werkzeuglos und zügig erfolgt.

Zweckmäßigerweise weist das erste Profilschienenstück auf einer dem Fahrzeug zugekehrten Seite eine zumindest abschnittsweise durchgehende Hohlkammer auf, wobei zweckmäßigerweise in der Hohlkammer eine Schlitzausnehmung ausgebildet ist, und wobei zweckmäßigerweise ein Gewindebolzen mit einem Kopfstück in die Hohlkammer einsetzbar ist. Vorteilhaft ist die Profilschiene mittels eines verdeckten Verbindungsmittels an eine Fahrzeugkarosserie des Fahrzeugs anschließbar, sodass für einen Betrachter von außen keine störenden Elemente z.B. Schrauben erkennbar sind, und dass vorteilhaft eine mögliche Korrosionsquelle ausgeschaltet wird. Ein weiterer Vorteil ist, dass die Verbindungsmittel innerhalb der Hohlkammer verlagerbar sind, sodass eine Montage der Profilschiene an die Fahrzeugkarosserie vereinfacht wird, indem Fertigungstoleranzen mittels einer Verlagerung des Verbindungsmittels ausgeglichen werden können. Alternativ sind der Gewindebolzen und das Kopfstück separat ausgebildet, wobei der Gewindebolzen und das Kopfstück miteinander z.B. über eine Schraubverbindung verbindbar sind. Ferner könnte der Gewindebolzen alternativ als ein Niet ausgebildet sein, um die Profilschiene über eine Nietverbindung an eine Fahrzeugkarosserie anzuschließen.

Vorteilhafterweise weist die Schlitzausnehmung eine Breite auf, die etwas größer als ein Außendurchmesser des Gewindebolzens ist, sodass der Gewindebolzen aus der Schlitzausnehmung herausragt, und sodass der Gewindebolzen mit etwas Spiel entlang der Schlitzausnehmung verlagerbar ist.

Zweckmäßigerweise erstrecken sich die Hohlkammer und die Schlitzausnehmung in Längsrichtung des ersten Profilschienenstücks. Hiermit ist vorteilhaft ein in die Hohlkammer eingesetztes Befestigungsmittel, z.B. ein Kopfstück mit einem aufgeschraubten Gewindebolzen oder eine Hammerkopfschraube, zuverlässig entlang des ersten Profilschienenstücks verlagerbar, wodurch eine Montagefreundlichkeit erhöht wird.

Vorzugsweise ist der erste stirnseitige Anschlussbereich in einer ersten Anschlussebene angeordnet, die einen ersten Winkel zu einer ersten, zu einer Erstreckung des Verbindungsstücks normalen Ebene aufweist. Vorteilhaft verbessert ein schräger erster Anschlussbereich des Verbindungsstücks und eine komplementäre schräge erste Stirnseite des ersten Profilschienenstücks ein Zusammenstecken des Verbindungsstücks und des ersten Profilschienenstücks, da eine Kontaktierung zwischen dem ersten Anschlussbereich des Verbindungsstücks und der ersten Stirnseite des ersten Profilschienenstücks nahezu spaltfrei ist. Des Weiteren werden Laufrolleneigenschaften einer Tragrolle der Türführung vorteilhaft begünstigt, da die Tragrolle an einem Übergang von Verbindungsstück und erstes Profilschienenstück durch eine nahezu spaltfreie und stufenlose Ausführung des Übergangs ruckfrei und laufruhig verlagert wird, wobei eine Verlagerungsrichtung der Tragrolle unter einem Winkel kleiner 90° auf einen Spalt trifft.

Zweckmäßigerweise verläuft die erste Anschlussebene unter einem ersten Winkel bezüglich der normalen Ebene des stirnseitigen Anschlussbereichs zwischen 20° und 70°, bevorzugt zwischen 25° und 35° und besonders bevorzugt zwischen 28° und 32°. Vorteilhaft konnte ermittelt werden, dass ein stirnseitiger Anschlussbereich unter einem Winkel von etwa 30° +/- 2° eine optimale Laufruhe und Leichtgängigkeit einer Tragrolle bei einer Verlagerung innerhalb der Profilschiene erzeugt.

Gemäß einer besonders bevorzugten Ausführungsgestaltung ist vorgesehen, dass das zweite Ende des Verbindungsstücks einen zweiten stirnseitigen Anschlussbereich zum Verbinden mit einem zweiten Profilschienenstück aufweist, dass der zweite stirnseitige Anschlussbereich in einer zweiten Anschlussebene angeordnet ist, die einen zweiten Winkel zu einer zweiten, zu einer Erstreckung des Verbindungsstücks normalen Ebene aufweist, und dass die zweite Anschlussebene unter einem zweiten Winkel bezüglich der zweiten normalen Ebene des zweiten stirnseitigen Anschlussbereiches zwischen 20° und 70°, bevorzugt zwischen 25° und 35° und besonders bevorzugt zwischen 28° und 32° verläuft. Vorteilhaft verbessert ein schräger zweiter Anschlussbereich des Verbindungsstücks und eine komplementäre schräge erste Stirnseite des zweiten Profilschienenstücks ein Zusammenstecken des Verbindungsstücks und des zweiten Profilschienenstücks, da eine Kontaktierung zwischen dem zweiten Anschlussbereich des Verbindungsstücks und der ersten Stirnseite des zweiten Profilschienenstücks nahezu spaltfrei ist. Des Weiteren werden Laufrolleneigenschaften einer Tragrolle der Türführung vorteilhaft begünstigt, da die Tragrolle an einem Übergang von Verbindungsstück und zweites Profilschienenstück durch eine nahezu spaltfreie und stufenlose Ausführung des Übergangs ruckfrei und laufruhig verlagert wird, wobei eine Verlagerungsrichtung der Tragrolle unter einem Winkel kleiner 90° auf einen Spalt trifft. Darüber hinaus konnte vorteilhaft ermittelt werden, dass ein stirnseitiger Anschlussbereich unter einem Winkel von etwa 30° +/- 2° eine optimale Laufruhe und Leichtgängigkeit der Tragrolle bei einer Verlagerung innerhalb der Profilschiene erzeugt.

Vorzugsweise erstreckt sich die erste Anschlussebene des ersten stirnseitigen Anschlussbereiches auf einer dem Fahrzeug zugewandten Seite fort von der ersten normalen Ebene in eine Richtung nach außen. Vorteilhaft wird eine Stabilität der Profilschiene auf diese Weise erhöht, wonach ein zuverlässiges Öffnen und Schließen einer Fahrzeugtür gewährleistet wird.

Bevorzugt ist vorgesehen, dass die zweite Anschlussebene des zweiten stirnseitigen Anschlussbereiches auf einer dem Fahrzeug zugewandten Seite sich fort von der zweiten normalen Ebene in eine Richtung nach außen erstreckt. Vorteilhaft wird eine Stabilität der Profilschiene auf diese Weise erhöht, wonach ein zuverlässiges Öffnen und Schließen einer Fahrzeugtür gewährleistet wird.

Bevorzugt ist vorgesehen, dass der erste stirnseitige Anschlussbereich als Steckelemente und/oder Rastelemente ausgebildete Vorsprünge aufweist, und dass die Steckelemente und die Rastelemente senkrecht bezüglich der ersten normalen Ebene angeordnet sind. Vorteilhaft wird ein intuitives Stecksystem zur Verfügung gestellt, wonach eine Montage zügig und werkzeuglos erfolgt.

Zweckmäßigerweise weist der zweite stirnseitige Anschlussbereich als Steckelemente und/oder Rastelemente ausgebildete Vorsprünge auf, wobei die Steckelemente und die Rastelemente zweckmäßigerweise senkrecht bezüglich der zweiten normalen Ebene angeordnet sind. Vorteilhaft wird ein intuitives Stecksystem zur Verfügung gestellt, wonach eine Montage zügig und werkzeuglos erfolgt.

Zweckmäßigerweise ist die erste Stirnseite und/oder die zweite Stirnseite des ersten Profilschienenstücks komplementär bezüglich des ersten stirnseitigen Anschlussbereiches des Verbindungsstücks ausgebildet. Vorteilhaft wird über komplementäre Anschlussflächen eine sehr gute Kontaktierung sichergestellt, wodurch die zusammengebaute Profilschiene eine bündige und spaltfreie Lauffläche bietet, sodass ein geräuscharmes und laufruhiges Verlagern einer Tragrolle ermöglicht wird.

Gemäß einer bevorzugten Ausführungsform sind die erste Anschlussebene und die zweite Anschlussebene parallel. Vorteilhaft erhöht dies eine Montagefreundlichkeit, sodass ein Zusammenbau der Profilschiene intuitiv erfolgt.

Besonders bevorzugt ist vorgesehen, dass das Verbindungsstück zumindest ein Rastelement mit einer nachgiebigen, elastischen Rastnase aufweist, und dass die Rastnase des Verbindungsstücks mit einem als eine Ausnehmung ausgebildeten Gegenrastelement des ersten Profilschienenstücks ver- und entriegelbar ist. Vorteilhaft wird das Verbindungsstück einfach und schnell mit dem ersten Profilschienenstück zusammengesteckt, wobei eine sofortige Verriegelung erfolgt, wobei auf weitere Verbindungsmittel verzichtet werden kann, sodass eine Montage intuitiv, werkzeuglos und zügig erfolgt.

Gemäß einer besonders bevorzugten Ausführungsform ist vorgesehen, dass das obere Verbindungsstückteil eine obere Rastnase aufweist, und dass das untere Verbindungsstückteil eine untere Rastnase aufweist. Hiermit wird vorteilhaft eine Stabilität der zusammengebauten Profilschiene sichergestellt, indem auftretende Kräfte gleichmäßig sowohl aus dem oberen Verbindungsstückteil als auch aus dem unteren Verbindungsstückteil in das erste Profilschienenstück übertragen werden können. Ferner wird vorteilhaft ein werkzeugloses sowie intuitives Verriegelungssystem zur Verfügung gestellt.

Vorzugsweise sind die obere Rastnase und die untere Rastnase parallel zueinander angeordnet, wobei die obere Rastnase und die untere Rastnase vorzugsweise abgekehrt voneinander angeordnet sind. Vorteilhaft können auf diese Weise in einem verrasteten Zustand Kräfte aus nahezu allen Richtungen aufgenommen und übertragen werden, sodass eine zuverlässige sowie stabile Profilschiene zur Verfügung gestellt wird.

Zweckmäßigerweise sind das obere Verbindungsstückteil und das untere Verbindungsstückteil miteinander durch ein Stecken verbunden. Es wird vorteilhaft ein einfaches Stecksystem zur Verfügung gestellt, welches vorteilhaft eine Stabilität des zusammengebauten Verbindungsstücks gewährleistet. Ferner erfolgt ein Zusammenstecken vorteilhaft zügig und werkzeuglos.

Gemäß einer bevorzugten Ausführungsform ist vorgesehen, dass das obere Verbindungsstückteil und das untere Verbindungsstückteil aus demselben Material hergestellt sind. Vorteilhaft weisen dieselben Materialien einen gleichen Wärmeausdehnungskoeffizienten auf, sodass eine temperaturbedingte Wärmeausdehnung keine unerwünschten Effekte erzeugt. Ferner liegen aufgrund derselben Materialauswahl vorteilhaft geringere Herstellkosten vor.

Zweckmäßigerweise ist das Verbindungsstück aus einem Kunststoffmaterial hergestellt. Bei dem Kunststoffmaterial bezüglich des Verbindungsstücks kann es sich beispielsweise um ein Polyamid, Polyvinylchlorid, Polyoxymethylen oder Polypropylen etc. handeln, welches mittels eines Spritzgussverfahrens hergestellt ist. Dadurch, dass ein Kunststoff weitaus flexibler ist als ein Stahl- oder ein Aluminiummaterial, ist ein Verbindungsstück aus Kunststoff besonders leicht mit anderen Profilschienenstücken verbindbar, indem das Verbindungsstück in einem gewissen Umfang elastisch verformbar ist. Ferner lässt sich ein Verbindungsstück aus Kunststoff auch besonders gut plastisch deformieren. Dies ist beispielsweise bei einem möglichen nachfolgenden Fügeprozess, in dem z. B. ein Durchsetzfügeverfahren (sogenanntes Clinchen) zum Einsatz kommt, von Bedeutung. Aufgrund der geringeren Dichte eines Kunststoffes im Vergleich zu einem metallischen Bauteil wird das Gesamtgewicht einer Verbund-Profilschiene vorteilhaft reduziert. Ferner kann ein Verbindungsstück aus Kunststoff im Falle von thermischen Längenänderungen als ein Puffer dienen und somit etwaige Längenänderungen der metallischen Bauteile kompensieren. Ein weiterer Vorteil eines Verbindungsstücks aus einem Kunststoffmaterial ist eine hohe Korrosionsbeständigkeit. Darüber hinaus ist ein Betrieb einer Verbund-Profilschiene, bei der Kunststoffmaterialien zum Einsatz kommen, vorteilhaft geräuscharm, da Kunststoffe störende Geräusche absorbieren sowie mögliche Vibrationen dämpfen. Aufgrund der Herstellung des Verbindungsstücks mittels eines Spritzgussverfahrens können somit auch relativ komplizierte Formen bezüglich des Verbindungsstücks sowohl kostengünstig als auch in großen Mengen zügig produziert werden.

Bevorzugt ist das erste Profilschienenstück aus einem metallischen Werkstoff hergestellt. Dadurch, dass das erste Profilschienenstück aus einem metallischen Werkstoff, z. B. aus einem Stahl oder einer Aluminiumlegierung, hergestellt ist, erhöht dies vorteilhaft die Tragfähigkeit sowie die Belastungsfähigkeit und somit auch die Lebensdauer der Türführung. Insbesondere geradlinige Profilschienenstücke werden bevorzugt mittels eines Strangpressverfahrens aus einer Aluminiumlegierung hergestellt. Bei einem Einsatz eines Stahls oder einer Aluminiumlegierung kann das jeweilige Profilschienenstück, um Verschleiß und Korrosion vorzubeugen, vor einer Endmontage an einer Fahrzeugkarosserie z. B. einem Anodisierungsverfahren oder einem Beschichtungsverfahren unterzogen werden.

Gemäß einer alternativen bevorzugten Ausgestaltung ist das erste Profilschienenstück aus einem Kunststoffmaterial hergestellt. Bei dem Kunststoffmaterial bezüglich des ersten Profilschienenstücks sowie des Verbindungsstücks kann es sich beispielsweise um ein Polyamid, Polyvinylchlorid, Polyoxymethylen oder Polypropylen etc. handeln. Aufgrund der geringeren Dichte eines Kunststoffes im Vergleich zu einem metallischen Bauteil wird das Gesamtgewicht der Profilschiene vorteilhaft reduziert. Ferner können Material- und Produktionskosten deutlich reduziert werden, indem die gesamte Profilschiene aus Kunststoff zur Verfügung gestellt wird. Hierbei werden alle Profilschienenstücke inklusive des Verbindungsstücks mittels eines Spritzgussverfahrens kostengünstig hergestellt. Darüber hinaus ist ein Betrieb der aus Kunststoff hergestellten Profilschiene vorteilhaft geräuscharm, da Kunststoffe störende Geräusche absorbieren sowie mögliche Vibrationen dämpfen. Ferner weisen alle eingesetzten Profilschienenstücke, die aus dem gleichen Material hergestellt sind, die gleichen mechanischen, thermischen und chemischen Eigenschaften auf, sodass bei beispielsweise einer thermischen Längenänderung aufgrund der gleichen Wärmeausdehnungskoeffizienten die Profilschiene eine gleichmäßige thermische Expansion bzw. eine gleichmäßige thermische Kontraktion ausführt. Vorteilhaft können somit mögliche auftretende innere Spannungen innerhalb der zusammengesetzten Profilschiene minimiert werden, wodurch eine zuverlässige und geräuscharme Verlagerung von Trag- und Führungsrollen stets gewährleistet ist.

Besonders bevorzugt ist das Kunststoffmaterial als strahlenvernetztes Kunststoffmaterial ausgebildet. Vorteilhaft können kostengünstige technische Kunststoffe mittels einer Strahlenvernetzung bezüglich ihrer mechanischen, thermischen sowie chemischen Eigenschaften derart verändert werden, dass diese den Eigenschaften von Hochleistungskunststoffen entsprechen. Strahlenvernetzte Kunststoffe weisen somit vorteilhaft eine erhöhte Tragfähigkeit sowie eine erhöhte Belastungsfähigkeit und somit auch eine erhöhte Lebensdauer der Türführung auf. Einerseits wird vorteilhaft infolge des eingesetzten Kunststoffmaterials das Gesamtgewicht der Profilschiene erheblich reduziert andererseits weist die Profilschiene mittels der Strahlenvernetzung vorteilhaft sehr gute mechanische, thermische und chemische Eigenschaften auf. Ferner können die einzelnen Profilschienenstücke und Verbindungsstücke mittels eines kostengünstigen Spritzgussverfahrens zügig und in hohen Mengen hergestellt werden.

Zweckmäßigerweise weist das zweite Ende des Verbindungsstücks einen zweiten stirnseitigen Anschlussbereich zum Verbinden mit einem zweiten Profilschienenstück auf, wobei das zweite Profilschienenstück eine erste Stirnseite und eine zweite Stirnseite aufweist. Hierbei ist das Verbindungsstück über den zweiten stirnseitigen Anschlussbereich mit zumindest einer Stirnseite des zweiten Profilschienenstücks mittels eines Stecksystems verbindbar. Vorteilhaft kann das Verbindungsstück sowohl als ein Mittelteil zwischen zwei Profilschienenstücken als auch als ein Endstück einer Profilschiene zum Einsatz kommen. Dies erhöht sowohl die Funktionalität als auch die Montagefreundlichkeit bezüglich der Herstellung sowie bezüglich der Anwendung der Profilschiene. Dementsprechend kann das Verbindungsstück einen zweiten stirnseitigen Anschlussbereich aufweisen, der wiederum wie das erste Profilschienenstück mittels eines Stecksystems mit dem zweiten Profilschienenstück verbindbar ist. Das zweite Profilschienenstück kann entweder aus einem Stahl oder aus einer Aluminiumlegierung oder aus einem Kunststoffmaterial entsprechend dem ersten Profilschienenstück ausgebildet sein.

Gemäß einer bevorzugten Ausgestaltung weist das Verbindungsstück zumindest einen gekrümmten Abschnitt mit zumindest einem Radius auf. Hierbei kommt vorteilhaft das Verbindungsstück als eine Art Eckverbinder oder als eine Art Winkelverbinder zum Einsatz, wodurch eine zusammengesetzte Profilschiene mittels der entsprechenden Profilschienenstücke über Eck oder zumindest abschnittsweise entlang einer gekrümmten Bahn verläuft. Ein als ein Eckverbinder ausgebildetes Verbindungsstück, das beispielsweise zumindest zwei Profilschienenstücke miteinander verbindet, weist vorteilhaft einen Winkel zwischen 90° und 150°, bevorzugt zwischen 140° und 100° und besonders bevorzugt zwischen 130° und 110° auf. Ein Innenradius des Verbindungsstücks beträgt bevorzugt zwischen 50 Millimeter und 100 Millimeter und besonders bevorzugt zwischen 60 Millimeter und 70 Millimeter, wodurch entsprechende Trag- und Führungsrollen der Türführung leichtgängig entlang einer gekrümmten Führungsbahn innerhalb des Verbindungsstücks verlagerbar sind. Das Verbindungsstück ist hierbei maßgeblich für den Winkel zwischen dem ersten Profilschienenstück und dem zweiten Profilschienenstück verantwortlich, sodass je nach Anwendungsfall individuelle Verbindungsstücke mit unterschiedlichen Winkeln und Radien zum Einsatz kommen können, wodurch eine sowohl montagefreundliche als auch eine flexible Baugruppe zur Verfügung gestellt wird, um eine individuelle Profilschiene zusammenzusetzen und diese schließlich an eine Fahrzeugkarosserie zu montieren. Vorteilhaft existieren somit geradlinige und gekrümmte Verbindungsstücke, um auch Profilschienen mit gekrümmten Abschnitten mittels eines Baukasten-Stecksystems schnell und effizient zur Verfügung zu stellen.

Zweckmäßigerweise weisen das erste Profilschienenstück ein erstes Führungsprofil und das Verbindungsstück ein zweites Führungsprofil auf. Hierbei ist das erste Führungsprofil des ersten Profilschienenstücks und das zweite Führungsprofil des Verbindungsstücks in einem zusammengesetzten Zustand der Profilschiene jeweils fluchtend und bündig zueinander angeordnet, wodurch Mittel zum Führen und zum Tragen einer Fahrzeugtür entlang der zusammengesetzten Profilschiene verlagerbar sind. Damit entsprechende Trag- und Führungsrollen und/oder etwaige Gleitelemente, die Bestandteile der Türführung sind, innerhalb zumindest einer Führungsbahn der Profilschiene leichtgängig und geräuscharm verlagerbar sind, sind vorteilhaft die jeweiligen Führungsprofile bezüglich der einzelnen Profilschienenstücke bzw. Verbindungsstücke identisch ausgeführt. Des Weiteren sind die Übergänge zwischen den einzelnen Profilschienenstücken bzw. Verbindungsstücken in einem zusammengesetzten Zustand der Profilschiene stufenlos und nahezu spaltfrei ausgeführt. Dementsprechend sind die jeweiligen Führungsprofile oder zumindest die jeweiligen Führungsbahnen hinsichtlich des Verbindungsstücks und des zumindest einen Profilschienenstücks bündig und fluchtend sowie Stoß an Stoß zueinander ausgerichtet. Unter einer Führungsbahn sind die Bereiche des Führungsprofils zu verstehen, die bei einer Verlagerung der Fahrzeugtür durch die Führungs- und Tragrollen sowie durch weitere mögliche Gleitelemente kontaktiert werden. Ferner ist vorteilhaft die gesamte Führungsbahn des Führungsprofils der Profilschiene glatt ausgebildet. Vorteilhaft kann hierdurch eine Fahrzeugtür sehr leichtgängig, mit einer hohen Laufruhe sowie geräuscharm entweder händisch oder mittels eines Motors geöffnet bzw. geschlossen werden.

Vorzugsweise weisen das erste Profilschienenstück und das Verbindungsstück jeweils einen C-förmigen Querschnitt auf. Vorteilhaft eignet sich ein C-förmiger Querschnitt besonders gut, um entsprechende Führungs- und Tragrollen in das Führungsprofil der Profilschiene einzusetzen sowie in dieser zuverlässig zu verlagern, ohne dass eine unerwünschte Entkopplung zwischen der Profilschiene und den Führungs- und Tragrollen stattfindet. Ferner ist eine Herstellung eines C-förmigen Bauteils z. B. mittels eines Spritzgussverfahrens für Kunststoffteile oder mittels eines Strangpressverfahrens für metallische Teile einfach sowie kostengünstig durchführbar, da insgesamt eine einfache Geometrie bezüglich der Profilschienenstücke bevorzugt wird. Darüber hinaus weist vorteilhaft ein C-förmiger Querschnitt eine sehr gute mechanische Stabilität auf, wodurch eine hohe Trag- und Belastungsfähigkeit der Profilschiene gewährleistet ist.

Vorzugsweise steht von einem Schenkel der C-förmigen Profilschiene noch ein Schenkel in einem Winkel zwischen 80° und 135°, bevorzugt zwischen 90° und 110° und besonders bevorzugt zwischen 90° und 100° ab. Vorteilhaft dient der angewinkelte vorstehende Schenkel der C-förmigen Profilschiene als eine Art Widerlager, sodass ein seitliches Herausfallen oder Herausrutschen der Führungs- und Tragrollen aus der Profilschiene nicht möglich ist. Die Führungs- und Tragrollen werden somit stets innerhalb der für die Führungs- und Tragrollen vorgesehenen Führungsbahn zuverlässig in Position gehalten.

Gemäß einer bevorzugten Ausgestaltung umfasst das Verbindungsstück zumindest ein Steckelement und zumindest ein Führungselement. Vorteilhaft weisen die entsprechenden Anschlussbereiche des Verbindungsstücks männliche Verbindungselemente für eine Steckverbindung mit Profilschienenstücken auf. Zu diesen Verbindungselementen zählen u. a. als vertikale Plättchen ausgebildete Führungs- und Haltehilfen, die jeweils stirnseitig von dem Verbindungsstück abstehen. Des Weiteren zählen zu den Verbindungselementen Steck- und Rastelemente, die jeweils stirnseitig von dem Verbindungsstück abstehen. Die Führungs- und Haltehilfen des Verbindungsstücks unterstützen eine fluchtende und bündige Ausrichtung mit einem weiteren Profilschienenstück in einem zusammengesetzten Zustand der Profilschiene. Ferner verhindern die Führungs- und Haltehilfen sowie die Steck- und Rastelemente vorteilhaft, dass das Verbindungsstück in einem zusammengesetzten Zustand der Profilschiene ein gewisses Spiel aufweist, sodass vorteilhaft das Verbindungsstück in irgendeine Richtung dessen Position bezüglich des angeschlossenen Profilschienenstücks nicht ändert. Darüber hinaus können die Steckelemente mit zumindest einer nachgiebigen, elastischen Rastnase ausgestattet sein, sodass das Verbindungsstück zumindest ein Rastelement aufweist. Eine Kombination aus Rast- und Steckelementen dient vorteilhaft einer stabilen kraftschlüssigen oder formschlüssigen Steckverbindung eines Verbindungsstücks mit einem weiteren Profilschienenstück. Hierbei handelt es sich bevorzugt um eine lösbare Steckverbindung mit engen Toleranzen, sodass das Verbindungsstück stramm mit dem Profilschienenstück verbunden ist. Um das Verbindungsstück an das Profilschienenstück anzuschließen, weist das Profilschienenstück bezüglich der männlichen Verbindungselemente des Verbindungsstücks bevorzugt korrespondierende weibliche Hohlkammerelemente auf. Des Weiteren weist das Profilschienenstück bevorzugt zumindest ein korrespondierendes Gegenrastelement auf, welches als eine Ausnehmung ausgebildet ist. In dem Gegenrastelement kann das elastische Rastelement bzw. die elastische Rastnase des Verbindungsstücks kraft- und formschlüssig einrasten. Vorteilhaft wird mittels der korrespondierenden männlichen und weiblichen Verbindungselemente ein einfaches, schnelles und intuitives Stecksystem für die Montage einer Profilschiene zur Verfügung gestellt, wobei kein zusätzliches Werkzeug benötigt wird.

Alternativ kann das Verbindungsstück zumindest an einem Ende weibliche Hohlkammerelemente umfassen, wobei zumindest ein Hohlkammerelement zumindest ein Gegenrastelement aufweist. Das erste Profilschienenstück und das zweite Profilschienenstück können dementsprechend für eine Steckverbindung mit dem Verbindungsstück jeweils zumindest auf einer Stirnseite dazugehörige männliche Steck- und Rastelemente aufweisen.

Vorzugsweise liegt in einem zusammengesetzten Zustand der Profilschiene das zumindest eine Führungselement des Verbindungsstücks in Längsrichtung des ersten Profilschienenstücks auf einer Innenseite des ersten Profilschienenstücks oder auf einer Außenseite des ersten Profilschienenstücks an. Hierbei kann vorteilhaft das Verbindungsstück in einem zusammengesetzten Zustand der Profilschiene insbesondere gegenüber möglich auftretenden Torsionskräften stabil in Position gehalten werden, sodass auch eine unerwünschte Verdrehung des Verbindungsstücks stets unterbunden ist. Insgesamt wird vorteilhaft mittels der vorstehenden Steck-, Rast- und Führungselemente das Verbindungsstück daran gehindert seine Position in irgendeine Richtung in einem zusammengesetzten Zustand der Profilschiene bezüglich des ersten Profilschienenstücks zu ändern. Ferner wird eine mögliche Torsionsverdrehung des Verbindungsstücks unterbunden, sodass die jeweiligen Führungsprofile bzw. Führungsbahnen stets fluchtend und bündig zueinander ausgerichtet sind, um ein leichtgängiges, laufruhiges und geräuscharmes Verlagern von Trag- und Führungsrollen innerhalb der gesamten Profilschiene zu gewährleisten.

Weitere Vorteile, Eigenschaften, Merkmale und Weiterbildungen der beanspruchten Erfindung ergeben sich aus der nachfolgenden Beschreibung eines bevorzugten Ausführungsbeispiels sowie aus den abhängigen Ansprüchen.

Die Erfindung wird nachstehend unter Bezugnahme auf die anliegenden

Zeichnungen näher erläutert. Die Figuren 1 bis 6 zeigen ein erstes nicht erfindungsgemässes Ausführungsbeispiel und die Figuren 7 bis 14 zeigen ein zweites erfindungsgemässes Ausführungsbeispiel.
- Fig. 1: zeigt eine perspektivische Explosionsansicht eines ersten Ausführungsbeispiels einer Profilschiene.
- Fig. 2: zeigt eine perspektivische Ansicht eines gekrümmten Verbindungsstücks der Profilschiene aus Fig. 1.
- Fig. 3: zeigt einen Querschnitt entlang der Linie III-III des ersten Profilschienenstücks aus Fig. 1.
- Fig. 4: zeigt in einer perspektivischen Ansicht die Profilschiene aus Fig. 1 in einem zusammengesetzten Zustand.
- Fig. 5: zeigt die Profilschiene aus Fig. 4 in einer Ansicht von oben.
- Fig. 6: zeigt einen Querschnitt entlang der Linie VI-VI des ersten Profilschienenstücks aus Fig. 5.
- Fig. 7: zeigt eine perspektivische Explosionsansicht eines zweiten Ausführungsbeispiels der erfindungsgemäßen Profilschiene.
- Fig. 8: zeigt eine perspektivische Rückansicht der Profilschiene aus Fig. 7.
- Fig. 9: zeigt eine zusammengesteckte Profilschiene aus Fig. 8.
- Fig. 10: zeigt eine Draufsicht eines Übergangsbereiches der zusammengesteckten Profilschiene aus Fig. 9.
- Fig. 11: zeigt eine perspektivische Ansicht eines gekrümmten zweiteiligen Verbindungsstücks in einem zusammengesteckten Zustand aus Fig. 10.
- Fig. 12: zeigt eine perspektivische Explosionsansicht des gekrümmten zweiteiligen Verbindungsstücks der Profilschiene aus Fig. 11.
- Fig. 13: zeigt eine perspektivische Rückansicht des gekrümmten zweiteiligen Verbindungsstücks der Profilschiene aus Fig. 12.
- Fig. 14: zeigt eine stirnseitige Vorderansicht Verbindungsstücks in einem zusammengesteckten Zustand aus Fig. 13.

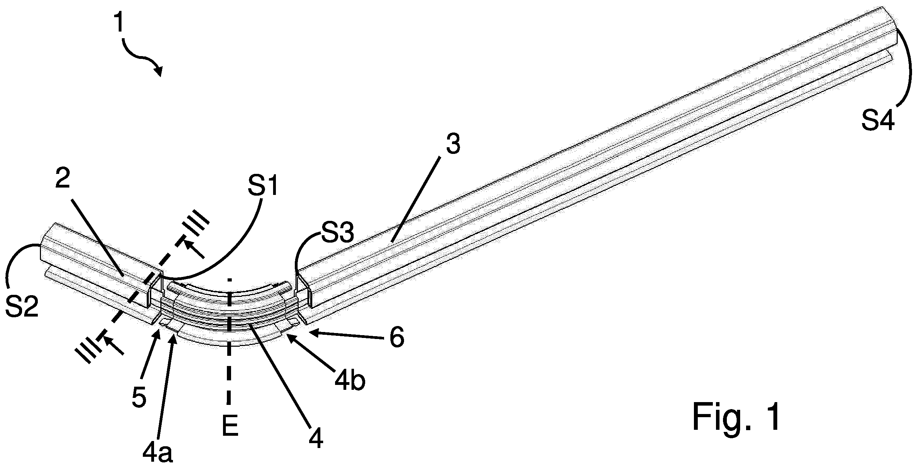

Fig. 1 zeigt in einer perspektivischen schematischen Ansicht einer Explosionsdarstellung ein erstes Ausführungsbeispiel für eine dreistückige Profilschiene 1, die ein erstes geradliniges Profilschienenstück 2, ein zweites geradliniges Profilschienenstück 3 und ein zwischen den beiden Profilschienenstücken 2 und 3 angeordnetes gekrümmtes Verbindungsstück 4 umfasst. Das Verbindungsstück 4 ist somit als ein drittes Profilschienenstück ausgebildet. Das erste Profilschienenstück 2 weist in eine Richtung zu dem Verbindungsstück 4 eine erste Stirnseite S1 auf, wobei das erste Profilschienenstück 2 in eine Richtung fort von dem Verbindungsstück 4 eine zweite Stirnseite S2 aufweist. Entsprechend dem ersten Profilschienenstück 2 weist das zweite Profilschienenstück 3 in eine Richtung zu dem Verbindungsstück 4 eine erste Stirnseite S3 auf, wobei das zweite Profilschienenstück 3 in eine Richtung fort von dem Verbindungsstück 4 eine zweite Stirnseite S4 aufweist. Das abschnittsweise gekrümmte Verbindungsstück 4 umfasst ein erstes Ende 4a, welches der ersten Stirnseite S1 des ersten Profilschienenstücks 2 zugewandt ist, und ein zweites Ende 4b, welches der ersten Stirnseite S3 des zweiten Profilschienenstücks 3 zugewandt ist. Einerseits umfasst das erste Ende 4a des Verbindungsstücks 4 einen ersten stirnseitigen Anschlussbereich 5 zum Verbinden mit dem ersten Profilschienenstück 2 und andererseits umfasst das zweite Ende 4b des Verbindungsstücks 4 einen zweiten stirnseitigen Anschlussbereich 6 zum Verbinden mit dem zweiten Profilschienenstück 3. Das Verbindungsstück 4 ist symmetrisch bezüglich einer halbierenden Mittelebene E ausgebildet. Somit weisen der erste Anschlussbereich 5 und der zweite Anschlussbereich 6 vorteilhaft die gleiche bzw. eine spiegelsymmetrische Geometrie auf.

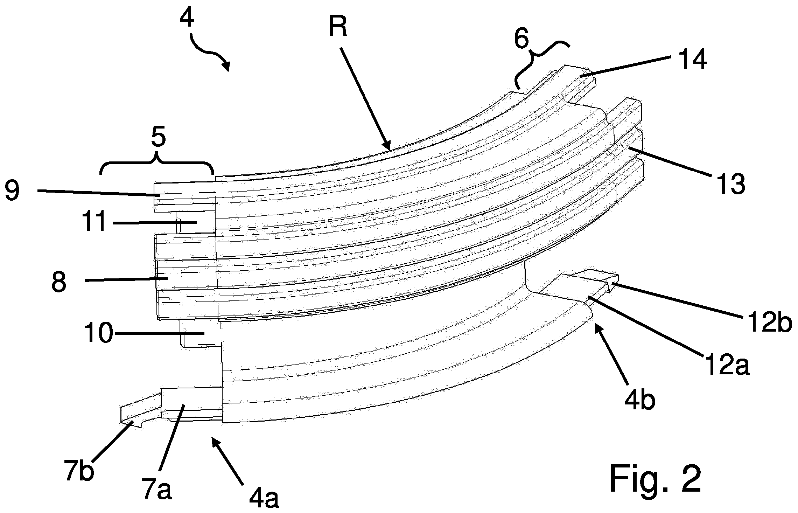

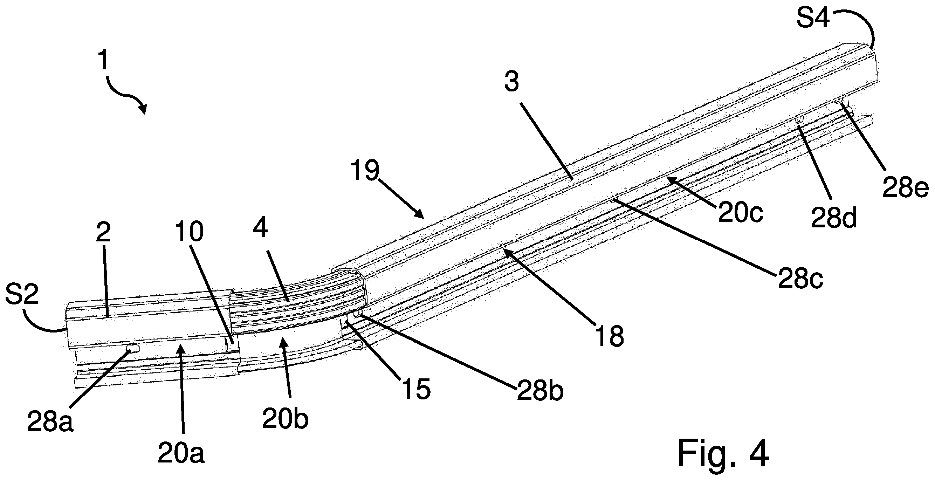

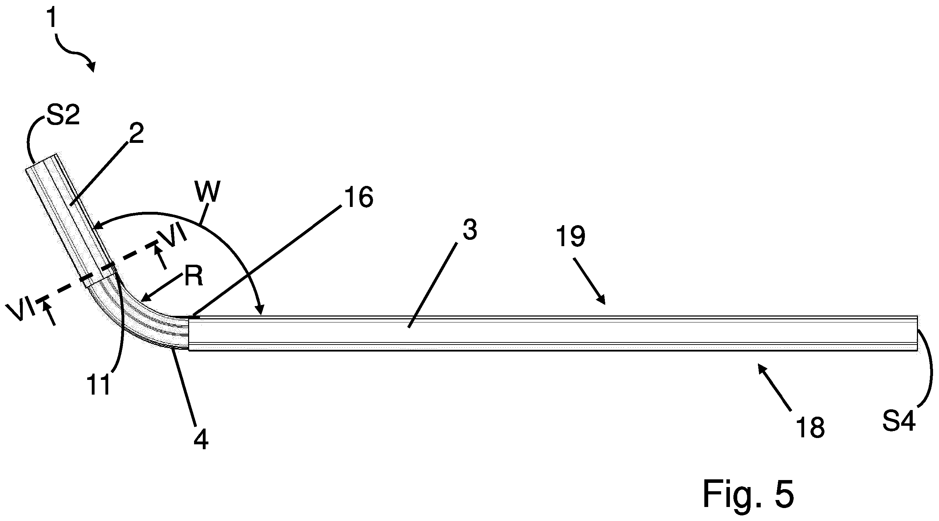

Fig. 2 zeigt in einer vergrößerten Ansicht das gekrümmte Verbindungsstück 4 mit einem Innenradius R aus Fig. 1, wobei der erste Anschlussbereich 5 ein erstes lineares Rastelement 7a mit einer ersten Rastnase 7b, ein erstes lineares Steckelement 8 und ein zweites lineares Steckelement 9 aufweist. Ferner enthält der erste Anschlussbereich 5 des Verbindungsstücks 4 ein erstes lineares Führungselement 10 und ein zweites lineares Führungselement 11, die jeweils als flächige dünnwandige Plättchen ausgebildet sind. Der zweite Anschlussbereich 6 des Verbindungsstücks 4 weist ein erstes lineares Rastelement 12a mit einer ersten Rastnase 12b, ein erstes lineares Steckelement 13 und ein zweites lineares Steckelement 14 auf. Ferner enthält der zweite Anschlussbereich 6 des Verbindungsstücks 4 ein erstes lineares Führungselement 15, welches in Fig. 4 ersichtlich ist, und ein zweites lineares Führungselement 16, welches in Fig. 5 ersichtlich ist. Die Führungselemente 10; 11; 15; 16 verhindern aufgrund ihrer Führungs- und Haltefunktion ein Verdrehen bzw. eine Positionsänderung in irgendeine Richtung des Verbindungsstücks 4 in einem zusammengesetzten Zustand der Profilschiene 1. Insgesamt ist das Verbindungsstück 4 mit dessen Rast- und Steckelementen 7a; 7b; 8; 9; 12a; 12b; 13; 14 sowie mit dessen Führungselementen 10; 11; 15; 16 einheitlich bzw. aus einem Guss ausgebildet.

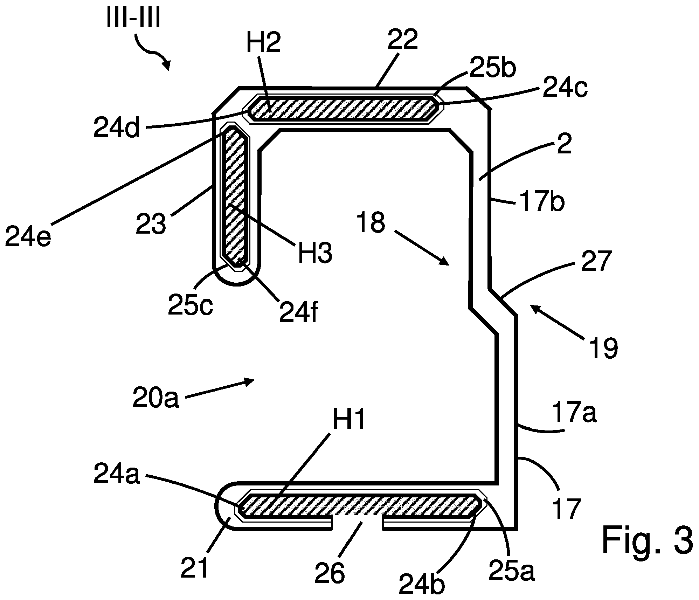

Fig. 3 zeigt einen C-förmigen Querschnitt entlang der Linie III-III des Profilschienenstücks 2 aus Fig. 1. Der C-förmige Querschnitt des Profilschienenstücks 2 weist eine als vertikale Wand ausgebildete Basis 17 mit einer Innenseite 18 und einer Außenseite 19 auf. Ein erstes Führungsprofil 20a des Profilschienenstücks 2, in dem die Führungs- und Tragrollen verlagerbar sind, befindet sich entsprechend auf einer der Innenseite 18 zugewandten Seite. Ferner weist die Basis 17 einen unteren Schenkel 21 und einen oberen Schenkel 22 auf, wobei von dem oberen Schenkel 22 stirnseitig ein dritter Schenkel 23 in eine Richtung zu dem unteren Schenkel 21 abgeht. Der untere Schenkel 21 weist eine erste Hohlkammer H1, in der ein Gegenrastelement 26 angeordnet ist, auf. Der obere Schenkel 22 weist eine zweite Hohlkammer H2 auf und der dritte Schenkel 23 weist eine dritte Hohlkammer H3 auf. Die Hohlkammern H1; H2; H3 sowie das Gegenrastelement 26 des ersten Profilschienenstücks 2 sind als weibliche Aufnahmeelemente für die jeweiligen männlichen Steck- und Rastelemente 7a; 7b; 8; 9 des Verbindungsstücks 4 aus Fig. 2 vorgesehen. Ferner weisen die Hohlkammern H1; H2; H3 des ersten Profilschienenstücks 2 abgerundete Ecken 24a; 24b; 24c; 24d; 24e; 24f sowie Einführschrägen 25a; 25b; 25c auf. Die Einführschrägen 25a; 25b; 25c sind jeweils an einem Eintritt in eine Hohlkammer H1; H2; H3 angeordnet und umfassen vollständig einen Umfang der jeweiligen Hohlkammer H1; H2; H3, sodass die Steck- und Rastelemente 7a; 7b; 8; 9 des Verbindungsstücks 4 leichtgängig in die entsprechenden Hohlkammern H1; H2; H3 des ersten Profilschienenstücks 2 einführbar sind. Das Gegenrastelement 26, welches in dem unteren Schenkel 21 des Profilschienenstücks 2 angeordnet ist, ist als eine Durchbrechung ausgebildet, in dem die Rastnase 7b des Rastelements 7a; 7b des Verbindungsstücks 4 aus Fig. 2 formschlüssig bei einem Zusammenstecken des Verbindungsstücks 4 mit dem Profilschienenstück 2 einrasten kann. Des Weiteren umfasst die Basis 17 eine stufenartige Abkantung 27, sodass ein unterer Bereich 17a der Basis 17 und ein oberer Bereich 17b der Basis 17 versetzt zueinander angeordnet sind.

Fig. 4 zeigt eine mit den separaten Profilschienenstücken 2; 3; 4 aus Fig. 1 zusammengesetzte Profilschiene 1. Die Profilschiene 1 ist für den Einsatz in einer Türführung für ein Fahrzeug ausgebildet. Die in Fig. 4 gezeigte Profilschiene 1 dient zur Führung von hier nicht näher gezeigten Trag- und Führungsmitteln einer Fahrzeugschiebetür und erstreckt sich im Wesentlichen axial entlang einer Hauptschieberichtung der Fahrzeugschiebetür. Um die Profilschiene 1 an eine Fahrzeugkarosserie zu montieren, weisen das erste Profilschienenstück 2 und das zweite Profilschienenstück 3 jeweils zumindest eine Langlochbohrung 28a; 28b; 28c; 28d; 28e auf. Unter Zuhilfenahme von kraft- und formschlüssigen Verbindungsmitteln z. B. Schrauben, die die Langlochbohrungen 28a; 28b; 28c; 28d; 28e des ersten Profilschienenstücks 2 und des zweiten Profilschienenstücks 3 durchsetzen, kann die Profilschiene 1 an eine Fahrzeugkarosserie angeschlossen werden. Ferner zeigt Fig. 4 die Führungselemente 10; 15 des Verbindungsstücks 4, die auf der Innenseite 18 der Profilschiene 1 angeordnet sind. Hierbei erstreckt sich das Führungselement 10 des Verbindungsstücks 4 in Längsrichtung bezüglich des ersten Profilschienenstücks 2 in eine Richtung zu der zweiten Stirnseite S2 des ersten Profilschienenstücks 2. Das Führungselement 15 des Verbindungsstücks 4 erstreckt sich in Längsrichtung bezüglich des zweiten Profilschienenstücks 3 in eine Richtung zu der zweiten Stirnseite S4 des zweiten Profilschienenstücks 3. Das erste Profilschienenstück 2 weist ein erstes Führungsprofil 20a auf. Das Verbindungsstück 4 weist ein zweites Führungsprofil 20b auf und das zweite Profilschienenstück 3 weist ein drittes Führungsprofil 20c auf. Damit entsprechende Trag- und Führungsrollen einwandfrei innerhalb der Führungsprofile 20a; 20b; 20c verlagerbar sind, weist die zusammengesetzte Profilschiene 1 zwischen dem ersten Profilschienenstück 2 und dem Verbindungsstück 4 und zwischen dem zweiten Profilschienenstück 3 und dem Verbindungsstück 4 einen bündigen und fluchtenden Übergang auf, sodass die Führungsprofile 20a; 20b; 20c des ersten Profilschienenstücks 2, des zweiten Profilschienenstücks 3 und des Verbindungsstücks 4 eine Einheit bilden, wodurch die Trag- und Führungsrollen innerhalb der zusammengesetzten Profilschiene 1 geräuscharm und mit einer hohen Laufruhe verlagerbar sind. Ferner sind die jeweiligen Übergänge der Profilschiene 1 nahezu spaltfrei sowie stufenlos ausgebildet.

Fig. 5 zeigt die zusammengesetzte Profilschiene 1 aus Fig. 4 in einer Ansicht von oben. Dadurch, dass das Verbindungsstück 4 einen gekrümmten Abschnitt mit einem Innenradius R aufweist, sind das erste Profilschienenstück 2 und das zweite Profilschienenstück 3 aufgrund des Verbindungsstücks 4 in einem Winkel W zueinander angeordnet. Der Winkel W beträgt hier 120°. Ferner beträgt der Innenradius R des Verbindungsstücks 4 in diesem Ausführungsbeispiel 65 Millimeter, sodass ein abgerundeter und gleichmäßiger Übergang von dem ersten Profilschienenstück 2 zu dem zweiten Profilschienenstück 3 durch das Verbindungsstück 4 gewährleistet ist. Ferner ist in Fig. 5 die Außenseite 19 der Profilschiene 1 ersichtlich, sodass die Führungselemente 11; 16 des Verbindungsstücks 4 erkennbar sind. Hierbei erstreckt sich das Führungselement 11 des Verbindungsstücks 4 in Längsrichtung bezüglich des ersten Profilschienenstücks 2 in eine Richtung zu der zweiten Stirnseite S2 des ersten Profilschienenstücks 2. Das Führungselement 16 des Verbindungsstücks 4 erstreckt sich in Längsrichtung bezüglich des zweiten Profilschienenstücks 3 in eine Richtung zu der zweiten Stirnseite S4 des zweiten Profilschienenstücks 3.

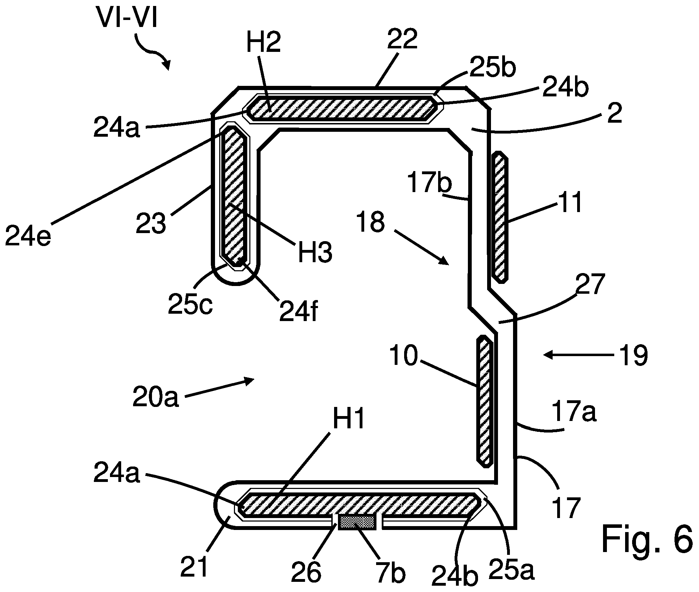

Fig. 6 zeigt einen C-förmigen Querschnitt entlang der Linie VI-VI des Profilschienenstücks 2 aus Fig. 5. In einem zusammengesteckten Zustand der Profilschiene 1 sind die Führungselemente 10; 11 des Verbindungsstücks 4 in Längsrichtung des Profilschienenstücks 2 jeweils auf der Innenseite 18 und auf der Außenseite 19 der Basis 17 anliegend angeordnet. Hierbei befindet sich das erste Führungselement 10 des Verbindungsstücks 4 auf der Innenseite 18 in dem unteren Bereich 17a der Basis 17. Das zweite Führungselement 11 des Verbindungsstücks 4 befindet sich auf der Außenseite 19 in dem oberen Bereich 17b der Basis 17. Infolgedessen wird aufgrund dieser die Basis 17 einklemmenden Anordnung eine unerwünschte Verdrehung des Verbindungsstücks 4 bezüglich des ersten Profilschienenstücks 2 unterbunden. Des Weiteren zeigt Fig. 6 die Rastnase 7b des Verbindungsstücks 4 in dem unteren Schenkel 21 des ersten Profilschienenstücks 2, welche in Eingriff mit dem Gegenrastelement 26 steht, wodurch das Verbindungsstück 4 in dem ersten Profilschienenstück 2 festgelegt ist.

Das zweite Profilschienenstück 3 weist entsprechend dem ersten Profilschienenstück 2 das gleiche Querschnittsprofil auf, sodass das zweite Profilschienenstück 3 mit dem Verbindungsstück 4 an dem zweiten Ende 4b, welches symmetrisch bezüglich des ersten Endes 4a ausgebildet ist, über den Anschlussbereich 6 zusammensteckbar ist.

Um das Verbindungsstück 4 mit dem ersten Profilschienenstück 2 formschlüssig zu verbinden, müssen das Verbindungsstück 4 und das erste Profilschienenstück 2 zunächst Stoß an Stoß angeordnet werden, sodass beispielsweise das erste Ende 4a des Verbindungsstücks 4 parallel zu der ersten Stirnseite S1 des ersten Profilschienenstücks 2 ausgerichtet ist. Des Weiteren weisen das Verbindungsstück 4 und das erste Profilschienenstück 2 jeweils einen C-förmigen Querschnitt auf, sodass das erste Ende 4a des Verbindungsstücks 4 und die erste Stirnseite S1 des ersten Profilschienenstücks kongruent bezüglich ihres C-förmigen Querschnitts auszurichten sind. Hierbei ist weiter zu beachten, dass die Steck- und Rastelemente 7a; 7b; 8; 9 bezüglich der Hohlkammern H1; H2; 3 der ersten Stirnseite S1 des ersten Profilschienenstücks 2 jeweils konzentrisch sowie koaxial auszurichten sind, sodass die Steck- und Rastelemente 7a; 7b; 8; 9 in die jeweiligen Hohlkammern H1; H2; H3, die sich innerhalb der Stirnseite S1 befinden, einführbar sind. Das Rastelement 7a mit der Rastnase 7b ist der ersten Hohlkammer H1 mit dem Gegenrastelement 26 zugeordnet. Das Steckelement 8 ist der dritten Hohlkammer H3 zugeordnet und das Steckelement 9 ist der zweiten Hohlkammer H2 zugeordnet. Ferner ist zu beachten, dass das Führungsprofil 20a des ersten Profilschienenstücks 2 und das Führungsprofil 20b des Verbindungsstücks 4 parallel, fluchtend und bündig zueinander angeordnet sind. Sobald die entsprechende Ausrichtung des ersten Profilschienenstücks 2 und des Verbindungsstücks 4 ausgeführt ist, kann das Verbindungsstück 4 mit dessen Steck- und Rastelementen 7a; 7b; 8; 9 in die korrespondierenden Hohlkammern H1; H2; H3 des ersten Profilschienenstücks 2 eingeführt und somit zusammengesteckt werden, bis die Rastnase 7b des Verbindungsstücks 4 in das Gegenrastelement 26 in dem unteren Schenkel 21 einrastet. Auf diese Weise ist eine kraft- und formschlüssige Steckverbindung zwischen dem Verbindungsstück 4 und dem ersten Profilschienenstück 2 entstanden. Das Gegenrastelement 26 ist in dem Führungsprofil 20a des ersten Profilschienenstücks 2 in dem unteren Schenkel 21 angeordnet. Ferner ist das Gegenrastelement 26 als eine Durchbrechung in dem unteren Schenkel 21 des ersten Profilschienenstücks 2 ausgebildet, sodass die Rastnase 7b an dessen Unterseite frei zugänglich ist. Durch ein Drücken auf die Unterseite der Rastnase 7b in eine Richtung zu dem oberen Schenkel 22 des Profilschienenstücks 2 kann die Rastnase 7b in eine Position außerhalb des Gegenrastelements 26 verlagert werden, indem die Rastnase 7b so weit nach oben verlagert wird, bis die Rastnase 7b außer Eingriff mit dem Gegenrastelement 26 steht. Insofern sich die Rastnase 7b außerhalb des Gegenrastelements 26 befindet, ist es möglich das Verbindungsstück 4 und das erste Profilschienenstück 2 durch ein Auseinanderziehen voneinander zu trennen. Hierbei kann die Steckverbindung zwischen dem Verbindungsstück 4 und dem ersten Profilschienenstück 2 auf eine einfache Art und Weise ohne einen Werkzeugeinsatz getrennt werden, sodass die Steck- und Rastelemente 7a; 7b; 8; 9 des Verbindungsstücks 4 aus den jeweiligen Hohlkammern H1; H2; H3 des ersten Profilschienenstücks 2 herausgezogen werden können. Infolgedessen erhält man wiederum zwei separate Profilschienenstücke, nämlich das Verbindungsstück 4 und das erste Profilschienenstück 2.

Um das zweite Profilschienenstück 3 an das zweite Ende 4b des Verbindungsstücks 4 anzuschließen werden die vorstehenden Schritte entsprechend dem Anschluss des ersten Profilschienenstücks 2 ausgeführt. Ein Trennen der Verbindung zwischen dem Verbindungsstück 4 und dem zweiten Profilschienenstück 3 wird ebenfalls entsprechend dem ersten Profilschienenstück 2 wie vorstehend beschrieben ausgeführt. Indem das erste Profilschienenstück 2 und das zweite Profilschienenstück 3 mit dem Verbindungsstück 4 verbunden werden, wird auf diese Weise eine Profilschiene 1, die in Fig. 4 gezeigt ist, zusammengesetzt und somit für einen Einsatz in einer Türführung eines Fahrzeuges zur Verfügung gestellt.

Eine Herstellung des gekrümmten Verbindungsstücks 4, welches aus einem Kunststoff besteht, erfolgt mittels eines Spritzgussverfahrens, da durch das Spritzgussverfahren beliebige Formen mit beliebigen Wandstärken wirtschaftlich sowie in einer hohen Menge herstellbar sind. Das Material des ersten Profilschienenstücks 2 und des zweiten Profilschienenstücks 3 ist eine Aluminiumlegierung, wobei die beiden geradlinigen Profilschienenstücke 2 und 3 mittels eines Strangpressverfahrens hergestellt werden. Durch den Einsatz von Aluminiumlegierungen ist eine erforderliche Tragfähigkeit sowie Belastbarkeit der Türführung sichergestellt, sodass auch Fahrzeugtüren mit einem erhöhten Gewicht zuverlässig eingesetzt und in Betrieb genommen werden können.

Insgesamt weist die Profilschiene 1 einen modulartigen Aufbau auf, indem infolge eines Baukasten-Stecksystems beliebige Schienenführungen vielseitig herstellbar sind. Durch den modulartigen Aufbau der Profilschiene 1 können mehrere gekrümmte oder geradlinige Verbindungsstücke 4 mit weiteren Profilschienenstücken 2 und 3 zusammengesteckt werden, da die jeweiligen Stirnseiten S1; S2; S3; S4 der Profilschienenstücke 2 und 3 und die Enden 4a; 4b sowie die Anschlussbereiche 5; 6 des Verbindungsstücks 4 stets aufeinander abgestimmt sind. Infolgedessen ist es möglich, beliebige individuelle Führungsbahnen einer Profilschiene 1 zusammenzusetzen. Der Vorteil ist, dass geforderte Fertigungs- und Einbautoleranzen stets eingehalten werden können, sodass stets eine reproduzierbare Montage an einem Fahrzeug ermöglicht wird. Hiermit sind standardisierte Einzelbauteile einer Profilschiene 1 für eine Türführung geschaffen, die exakt aufeinander abgestimmt sind. Ferner ist somit eine Grundlage für eine robotergestützte Automation des Zusammenbaus geschaffen. Die Profilschiene 1 gewährleistet schließlich einen geräuscharmen Betrieb sowie eine lange Lebensdauer, wonach sich eine entsprechende Türführung durch eine sehr hohe Qualität auszeichnet.

Die vorstehend erläuterte Steckverbindungstechnik der Profilschiene 1 umfasst eine erste formschlüssige Steckverbindungskomponente, welche durch das Rastelement 7a; 7b des Verbindungsstücks 4 und des dazugehörigen Gegenrastelements 26 des ersten Profilschienenstücks 2 infolge eines Ineinandergreifens entsteht. Die Profilschiene 1 umfasst weiter eine zweite kraftschlüssige Steckverbindungskomponente, indem die Steckelemente 8; 9, ein erster Steckbereich des Rastelements 7a sowie die Führungselemente 10; 11 des Verbindungsstücks 4 reibend und klemmend in der Art einer Presspassung entsprechend in dem unteren Bereich 17a sowie in dem oberen Bereich 17b der Basis 17 und in den Hohlkammern H1; H2; H3 des ersten Profilschienenstücks 2 anliegen. Ferner könnte eine alternative Steckverbindungstechnik der Profilschiene 1 ausschließlich über Kraftschluss erfolgen, indem keine Rastelemente vorgesehen sind, sodass ein Auseinanderbauen der Profilschiene 1 in deren Einzelteile 2; 3; 4 noch einfacher und schneller durchführbar ist.

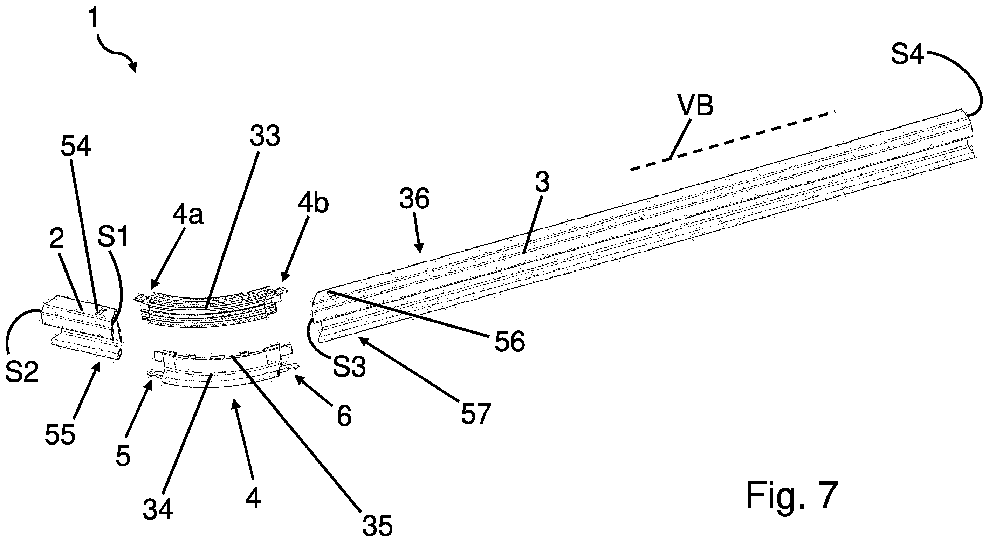

Fig. 7 bis Fig. 10 zeigen ein bevorzugtes zweites Ausführungsbeispiel der erfindungsgemäßen Profilschiene 1. Hierbei weist das zweite Ausführungsbeispiel der Profilschiene 1 mehrere Unterschiede bezüglich des ersten Ausführungsbeispiels auf.

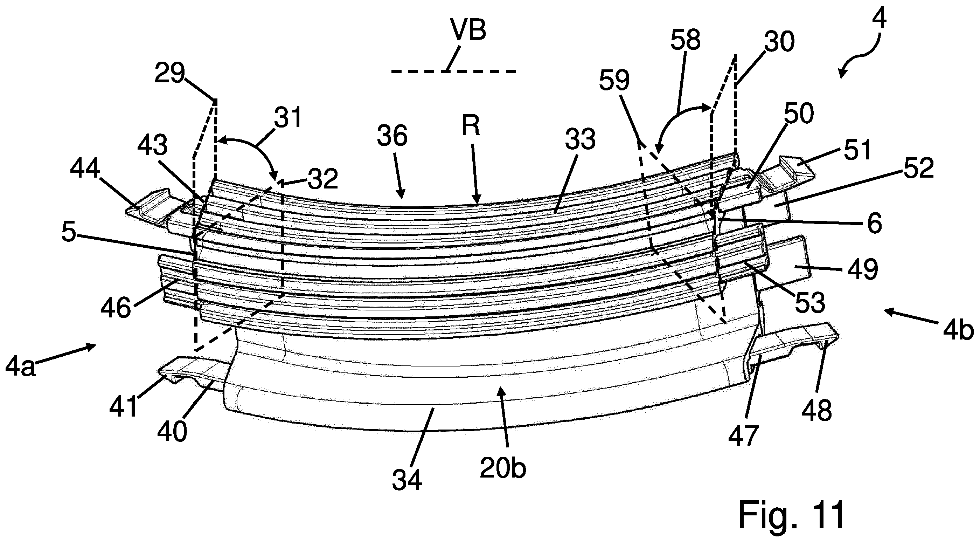

Ein Unterschied ist, dass das Verbindungsstück 4, welches u.a. in Fig. 11 bis Fig. 14 vergrößert dargestellt ist, nunmehr aus zwei Teilstücken zusammengesetzt ist.

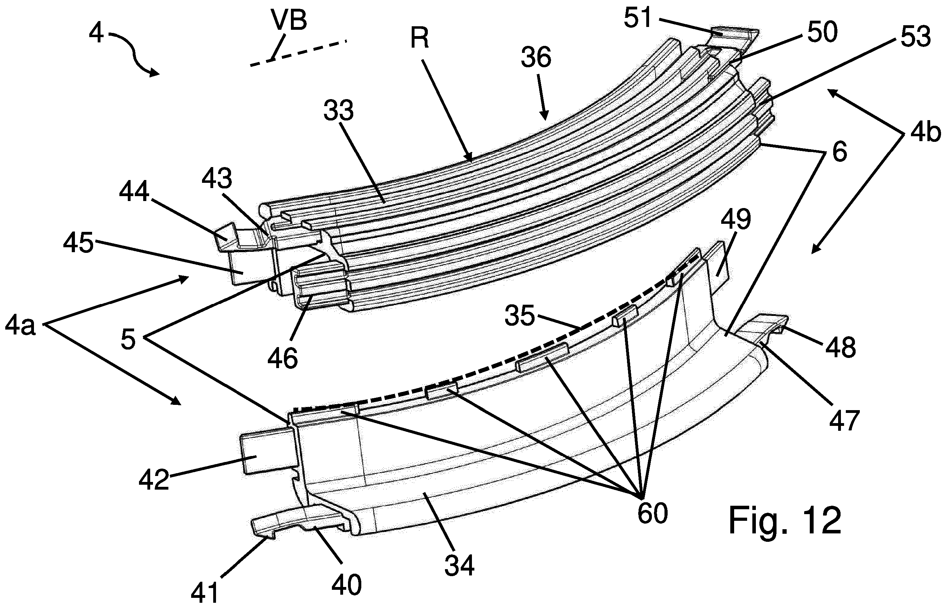

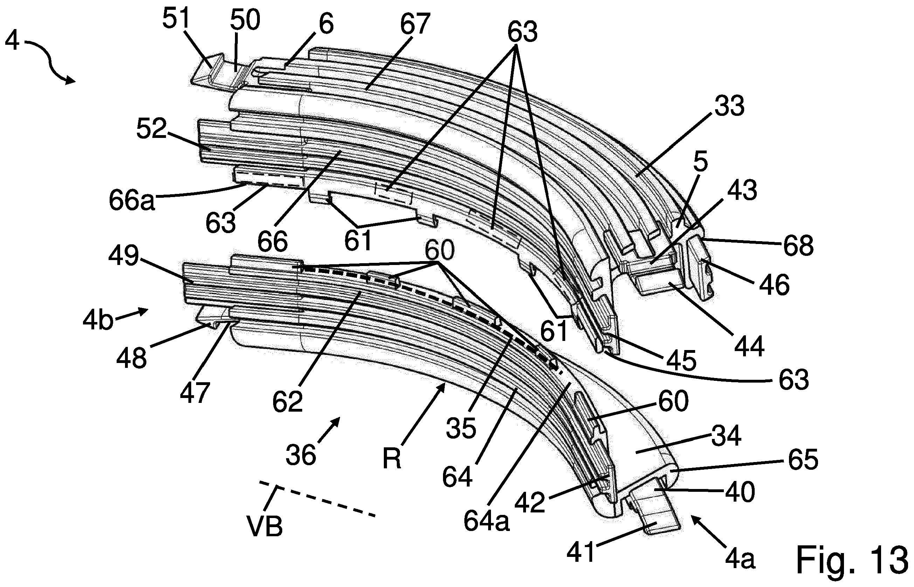

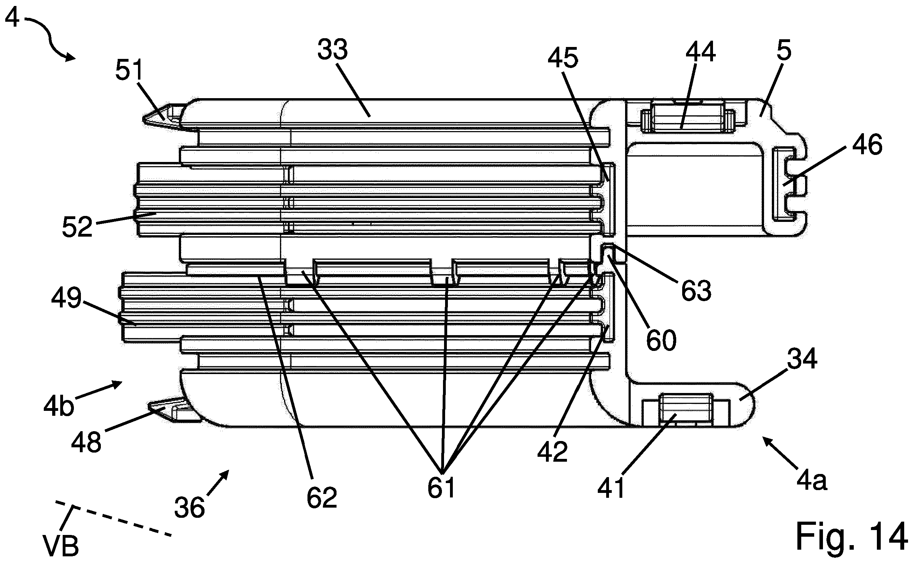

Fig. 12 und Fig. 13 zeigen, dass das mit einem Radius R gekrümmte Verbindungsstück 4 ein oberes Verbindungsstückteil 33 und ein unteres Verbindungsstückteil 34 umfasst, wobei das obere Verbindungsstückteil 33 und das untere Verbindungsstückteil 34 entlang einer Verbindungslinie 35 zu einer Einheit kraft- und formschlüssig mittels Verbindungslinien-Steckelementen 60 sowie mittels Verbindungslinien-Rastelementen 61 zusammensteckbar sind. Das obere Verbindungsstückteil 33 und das untere Verbindungsstückteil 34 sind somit separate Bauteile, die in einem zusammengesteckten Zustand das Verbindungsstück 4 gemäß Fig. 11 und Fig. 14 ausbilden. Ferner bestehen das obere Verbindungsstückteil 33 und das untere Verbindungsstückteil 34 aus demselben Kunststoffmaterial.

Fig. 13 zeigt, dass das untere Verbindungsstückteil 34 insgesamt fünf als rechteckförmige Vorsprünge ausgebildete Verbindungslinien-Steckelemente 60 aufweist, wobei das obere Verbindungsstückteil 33 komplementäre Aussparungen 63 aufweist, die gestrichelt dargestellt sind, in denen die Verbindungslinien-Steckelemente 60 kraftschlüssig einsteckbar sind.

Hierbei weist das untere Verbindungsstückteil 34 einen L-förmigen Querschnitt auf, wobei der L-förmige Querschnitt einen der Fahrzeugkarosserie VB zugewandten ersten vertikalen Schenkel 64 und einen von der Fahrzeugkarosserie VB abgekehrten zweiten horizontalen Schenkel 65 umfasst. Die Verbindungslinien-Steckelemente 60 sind auf einer horizontalen Oberfläche 64a des ersten vertikalen Schenkels 64 des unteren Verbindungsstückteils 34 angeordnet, wobei die Verbindungslinien-Steckelemente 60 sich in Längsrichtung des unteren Verbindungsstückteils 34 erstrecken. Ferner weisen die Verbindungslinien-Steckelemente 60 unterschiedliche Längen auf, sodass das untere Verbindungsstückteil 34 drei lange und zwei kurze Verbindungslinien-Steckelemente 60 aufweist, welche der Krümmung des Radius R folgen.

Das obere Verbindungsstückteil 33 weist einen um 180° gedrehten U-förmigen Querschnitt auf, wobei der U-förmige Querschnitt einen der Fahrzeugkarosserie VB zugewandten ersten vertikalen Schenkel 66, einen von der Fahrzeugkarosserie VB abgekehrten zweiten horizontalen Schenkel 67 und einen von dem zweiten Schenkel 67 abgehenden dritten vertikalen Schenkel 68 umfasst. Hierbei sind auf einer horizontalen Oberfläche 66a des ersten vertikalen Schenkels 66 des oberen Verbindungsstückteils 33 Aussparungen 63 angeordnet, die jeweils als eine komplementäre Aufnahme für die Verbindungslinien-Steckelemente 60 des unteren Verbindungsstückteils 34 vorgesehen sind.

Ferner stehen von der horizontalen Oberfläche 66a des ersten vertikalen Schenkels 66 des oberen Verbindungsstückteils 33 vier gleich lange vertikale Verbindungslinien-Rastelemente 61 vor, die bündig mit einer Rückseite des ersten vertikalen Schenkels 66 angeordnet sind, und die an die Krümmung des Radius R angepasst sind.

Sowohl die Verbindungslinien-Steckelemente 60 als auch die Verbindungslinien-Rastelemente 61 sind senkrecht bezüglich einer Erstreckungsrichtung des oberen Verbindungsstückteils 33 bzw. des unteren Verbindungsstückteils 34 angeordnet, wobei diese zueinander zugewandt sind.

Um das obere Verbindungsstückteil 33 mit dem unteren Verbindungsstückteil 34 zusammenzustecken, werden die Verbindungslinien-Steckelemente 60 des unteren Verbindungsstückteils 34 fluchtend mit den Aussparungen 63 des oberen Verbindungsstückteils 33 angeordnet und ineinandergesteckt. Die unterschiedlichen Längen der Verbindungslinien-Steckelemente 60 bzw. der komplementären Aussparungen 63 unterstützen bei einer Montage die korrekte Ausrichtung sowie Positionierung des oberen Verbindungsstückteils 33 und des unteren Verbindungsstückteils 34. Darüber hinaus hintergreifen bzw. verrasten die vier als Klauen ausgebildete Verbindungslinien-Rastelemente 61, welche auf einer der Fahrzeugkarosserie VB zugewandten Seite 36 des unteren Verbindungsstückteils 34 angeordnet sind, eine als Rippe ausgebildete Hinterschneidung 62 des unteren Verbindungsstückteils 34. Somit sind das obere Verbindungsstückteil 33 und das untere Verbindungsstückteil 34 kraft- und formschlüssig miteinander verbunden, wodurch ein stabiles Verbindungsstück 4 zur Verfügung gestellt wird.

Fig. 14 zeigt eine Vorderansicht des zusammengesetzten Verbindungsstücks 4. Es ist gut zu erkennen, dass das stirnseitige Verbindungslinien-Steckelement 60 des unteren Verbindungsstückteils 34 in der stirnseitigen Aussparung 63 des oberen Verbindungsstückteils 33 angeordnet ist, wobei eine nach außen gerichtete Seite der stirnseitigen Aussparung 63 offen ist. Des Weiteren ist in Verbindung mit Fig. 12 gut zu erkennen, dass die Führungselemente 42; 45; 49; 52 sowie die Steckelemente 46; 53 des oberen Verbindungsstückteils 33 und des unteren Verbindungsstückteils 34 profiliert ausgebildet sind. Ferner weisen die Rastnasen 41; 44; 48; 51 des oberen Verbindungsstückteils 33 und des unteren Verbindungsstückteils 34 unterschiedliche Breiten auf, wodurch die Stabilität des Verbindungsstücks 4 innerhalb der zusammengesteckten Profilschiene 1 hinsichtlich etwaiger Torsionskräfte erhöht wird.

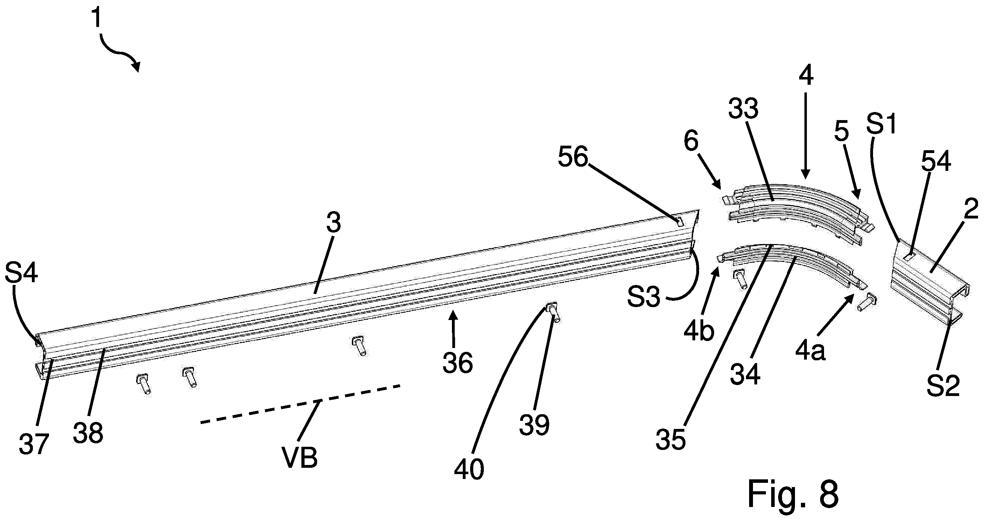

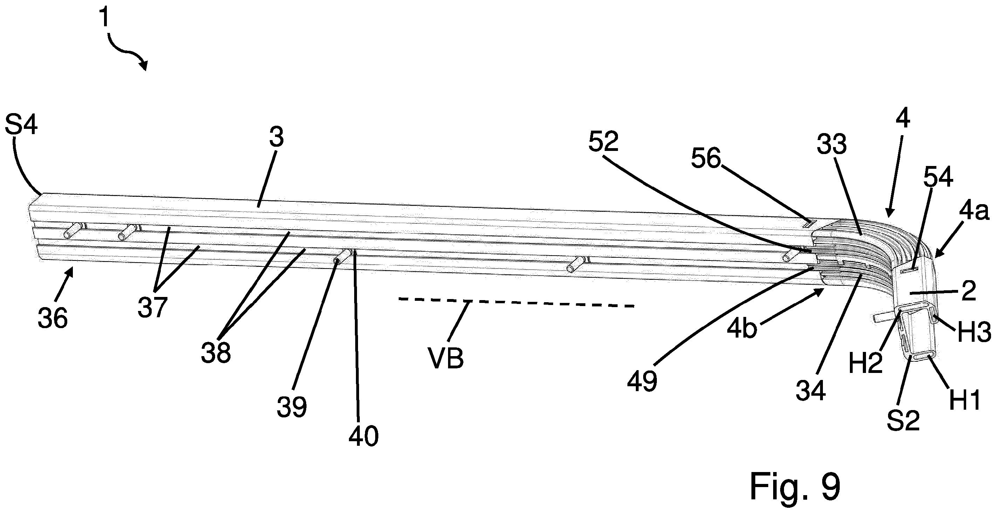

Ein weiterer Unterschied ist, dass nunmehr das erste Profilschienenstück 2 und das zweite Profilschienenstück 3 auf der der Fahrzeugkarosserie VB des Fahrzeugs zugewandten Seite 36 eine obere und eine untere in Längsrichtung ausgebildete Hohlkammer 37 mit jeweils einer Schlitzausnehmung 38 aufweisen, so wie in Fig. 8 und in Fig. 9 gezeigt, sodass ein Kopfstück 40 eines Gewindebolzens 39 in der Hohlkammer 37 einsetzbar sowie in Längsrichtung des ersten Profilschienenstücks 2 bzw. des zweiten Profilschienenstücks 3 verlagerbar ist. Der Gewindebolzen 39 steht somit fort von der Profilschiene 1 in Richtung zu der Fahrzeugkarosserie VB ab, wobei das Kopfstück 40 des Gewindebolzens 39 in der Hohlkammer 37 verschieblich angeordnet ist.

Hiermit wird vorteilhaft die Flexibilität der mit dem Fahrzeug zu montierenden Profilschiene 1 erhöht, indem die Position des Gewindebolzens 39 in Längsrichtung des ersten Profilschienenstücks 2 bzw. des zweiten Profilschienenstücks 3 geführt anpassbar ist, wonach Fertigungstoleranzen einfach durch ein geführtes Verschieben des Gewindebolzens 39 innerhalb der Hohlkammer 37 ausgeglichen werden können. Ferner sind Befestigungselemente zur Befestigung der Profilschiene 1 mit der Fahrzeugkarosserie VB für eine Person von außen nicht sichtbar und es wird vorteilhaft eine Korrosionsquelle eliminiert.

Fig. 7 bis Fig. 10 zeigen, dass das erste Profilschienenstück 2 ein als eine rechteckige Durchbrechung ausgebildetes oberes Gegenrastelement 54 und ein gegenüberliegendes als eine rechteckige Durchbrechung ausgebildetes unteres Gegenrastelement 55 aufweist. Das zweite Profilschienenstück 3 weist ein als eine rechteckige Durchbrechung ausgebildetes oberes Gegenrastelement 56 und ein gegenüberliegendes als eine rechteckige Durchbrechung ausgebildetes unteres Gegenrastelement 57 auf. Hierbei sind in Fig. 7 bis Fig. 10 lediglich die oberen Gegenrastelemente 54; 56 des ersten Profilschienenstücks 2 bzw. des zweiten Profilschienenstücks 3 erkennbar.

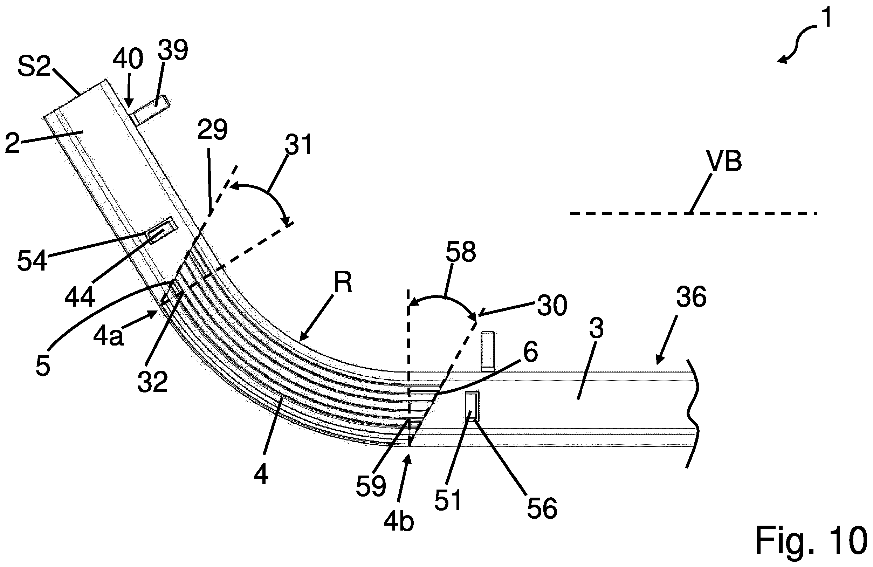

Ein weiterer Unterschied ist, dass der erste stirnseitige Anschlussbereich 5 des Verbindungsstücks 4 in einer ersten Anschlussebene 29 angeordnet ist, was in Fig. 10 und Fig. 11 erkennbar ist, wobei die erste Anschlussebene 29 unter einem ersten Winkel 31 von einer ersten normalen Ebene 32 verläuft. Ferner ist der zweite gegenüberliegende stirnseitige Anschlussbereich 6 des Verbindungsstücks 4 in einer zweiten Anschlussebene 30 angeordnet, wobei die zweite Anschlussebene 30 unter einem zweiten Winkel 58 von einer zweiten normalen Ebene 59 verläuft. Sowohl die erste normale Ebene 32 als auch die gegenüberliegende zweite normale Ebene 59 sind senkrecht zu einer Erstreckungsrichtung des Verbindungsstücks 4 angeordnet.

Des Weiteren sind der erste stirnseitige Anschlussbereich 5 mit der ersten Anschlussebene 29 und der zweite stirnseitige Anschlussbereich 6 mit der zweiten Anschlussebene 30 parallel zueinander angeordnet, was in Fig. 10 in einer Ansicht von oben erkennbar ist. Ferner beträgt sowohl der erste Winkel 31 als auch der zweite Winkel 58 etwa 30°.

Fig. 11 bis Fig. 14 zeigen, dass der erste stirnseitige Anschlussbereich 5 des oberen Verbindungsstückteils 33 ein oberes Rastelement 43 mit einer Rastnase 44, ein oberes Führungselement 45 sowie ein Steckelement 46 aufweist, wobei das obere Rastelement 43 mit der Rastnase 44, das obere Führungselement 45 sowie das Steckelement 46 senkrecht bezüglich der ersten normalen Ebene 32 angeordnet sind.

Der gegenüberliegende zweite stirnseitige Anschlussbereich 6 des oberen Verbindungsstückteils 33 weist ein oberes Rastelement 50 mit einer Rastnase 51, ein oberes Führungselement 52 sowie ein Steckelement 53 auf, wobei das obere Rastelement 50 mit der Rastnase 51, das obere Führungselement 52 sowie das Steckelement 53 senkrecht bezüglich der zweiten normalen Ebene 59 angeordnet sind.

Ferner weist der erste stirnseitige Anschlussbereich 5 des unteren Verbindungsstückteils 34 ein unteres Rastelement 40 mit einer Rastnase 41 und ein unteres Führungselement 42 auf, wobei das untere Rastelement 40 mit der Rastnase 41 und das untere Führungselement 42 senkrecht bezüglich der ersten normalen Ebene 32 angeordnet sind.

Der gegenüberliegende zweite stirnseitige Anschlussbereich 6 des unteren Verbindungsstückteils 34 weist ein unteres Rastelement 47 mit einer Rastnase 48 und ein unteres Führungselement 49 auf, wobei das untere Rastelement 47 mit der Rastnase 48 und das untere Führungselement 49 senkrecht bezüglich der zweiten normalen Ebene 59 angeordnet sind.

Infolgedessen sind in einem zusammengesetzten Zustand der Profilschiene 1 die jeweiligen Rastnasen 41; 44; 48; 51 des Verbindungsstücks 4 in den entsprechenden Gegenrastelementen 54; 55; 56; 57 der beiden Profilschienenstücke 2;3 in Eingriff, wobei das erste Profilschienenstück 2 und das zweite Profilschienenstück 3 jeweils bezüglich des Verbindungsstücks 4 komplementäre Stirnseiten S1; S2; S3; S4 für ein bündiges und nahezu spaltfreies Zusammenstecken der Profilschiene 1 aufweisen.

Ferner zeigt Fig. 9, dass in einem zusammengesetzten Zustand der Profilschiene 1 die Führungselemente 49; 52 des Verbindungsstücks 4 zumindest abschnittsweise in jeweils einer unteren und oberen Hohlkammer 37 des zweiten Profilschienenstücks 3 angeordnet sind. Die gegenüberliegenden, hier nicht sichtbaren, Führungselemente 42; 45 sind entsprechend in der unteren bzw. oberen Hohlkammer 37 des ersten Profilschienenstücks 2 angeordnet.

## Patentansprüche

1. Profilschiene für eine Türführung eines Fahrzeuges, umfassend
ein erstes Profilschienenstück (2) mit einer ersten Stirnseite (S1) und mit einer zweiten Stirnseite (S2), und
ein Verbindungsstück (4),
wobei das Verbindungsstück (4) ein erstes Ende (4a) und ein zweites Ende (4b) aufweist,
wobei das erste Ende (4a) des Verbindungsstücks (4) einen ersten stirnseitigen Anschlussbereich (5) zum Verbinden mit dem ersten Profilschienenstück (2) aufweist,
wobei das Verbindungsstück (4) als ein separates Profilschienenstück ausgebildet ist, und
wobei das Verbindungsstück (4) über den ersten stirnseitigen Anschlussbereich (5) mit zumindest einer Stirnseite (S1; S2) des ersten Profilschienenstücks (2) mittels eines Stecksystems verbindbar ist,
**dadurch gekennzeichnet,**
**dass** das Verbindungsstück (4) ein oberes Verbindungsstückteil (33) und ein unteres Verbindungsstückteil (34) umfasst, und
**dass** das obere Verbindungsstückteil (33) und das untere Verbindungsstückteil (34) entlang einer bezüglich des ersten stirnseitigen Anschlussbereiches (5) zumindest abschnittsweise quer verlaufenden Verbindungslinie (35) miteinander verbindbar sind.

2. Profilschiene nach Anspruch 1, **dadurch gekennzeichnet, dass** das obere Verbindungsstückteil (33) eine obere Rastnase (43; 44; 50; 51) aufweist, und dass das untere Verbindungsstückteil (34) eine untere Rastnase (40; 41; 47; 48) aufweist.

3. Profilschiene nach Anspruch 2, **dadurch gekennzeichnet, dass** die obere Rastnase (43; 44; 50; 51) und die untere Rastnase (40; 41; 47; 48) parallel zueinander angeordnet sind, und dass die obere Rastnase (43; 44; 50; 51) und die untere Rastnase (40; 41; 47; 48) abgekehrt voneinander angeordnet sind.

4. Profilschiene nach einem der Ansprüche 1 bis 3, **dadurch gekennzeichnet, dass** das obere Verbindungsstückteil (33) und das untere Verbindungsstückteil (34) miteinander durch ein Stecken verbunden sind.

5. Profilschiene nach Anspruch 4, **dadurch gekennzeichnet, dass** das obere Verbindungsstückteil (33) und das untere Verbindungsstückteil (34) entlang der Verbindungslinie (35) zu einer Einheit kraft- und formschlüssig mittels Verbindungslinien-Steckelementen (60) sowie mittels Verbindungslinien-Rastelementen (61) zusammensteckbar sind.

6. Profilschiene nach einem der Ansprüche 1 bis 5, **dadurch gekennzeichnet, dass** das obere Verbindungsstückteil (33) und das untere Verbindungsstückteil (34) aus demselben Material hergestellt sind.

7. Profilschiene nach einem der Ansprüche 1 bis 6, **dadurch gekennzeichnet, dass** das erste Profilschienenstück (2) auf einer dem Fahrzeug zugekehrten Seite (36) eine zumindest abschnittsweise durchgehende Hohlkammer (37) aufweist, dass in der Hohlkammer (37) eine Schlitzausnehmung (38) ausgebildet ist, und dass ein Gewindebolzen (39) mit einem Kopfstück (40) in die Hohlkammer (37) einsetzbar ist.

8. Profilschiene nach Anspruch 7, **dadurch gekennzeichnet, dass** die Hohlkammer (37) und die Schlitzausnehmung (38) sich in Längsrichtung des ersten Profilschienenstücks (2) erstrecken.

9. Profilschiene nach einem der Ansprüche 1 bis 8, **dadurch gekennzeichnet, dass** der erste stirnseitige Anschlussbereich (5) in einer ersten Anschlussebene (29) angeordnet ist, die einen ersten Winkel (31) zu einer ersten, zu einer Erstreckung des Verbindungsstücks (4) normalen Ebene (32) aufweist, und dass der erste Winkel (31) zwischen der ersten Anschlussebene (29) und der ersten normalen Ebene (32) zwischen 20° und 70°, bevorzugt zwischen 25° und 35° und besonders bevorzugt zwischen 28° und 32° verläuft.

10. Profilschiene nach Anspruch 9, **dadurch gekennzeichnet, dass** der erste stirnseitige Anschlussbereich (5) als Steckelemente (8; 9; 46) und Rastelemente (7a; 7b; 40; 41; 43; 44) ausgebildete Vorsprünge aufweist, und dass die Steckelemente (8; 9; 46) und die Rastelemente (7a; 7b; 40; 41; 43; 44) senkrecht bezüglich der ersten normalen Ebene (32) angeordnet sind.

11. Profilschiene nach einem der Ansprüche 1 bis 10, **dadurch gekennzeichnet, dass** das Verbindungsstück (4) zumindest ein Rastelement (7a; 12a; 40; 43; 47; 50) mit einer nachgiebigen, elastischen Rastnase (7b; 12b; 41; 44; 48; 51) aufweist, und dass die Rastnase (7b; 41; 44) des Verbindungsstücks (4) mit einem als eine Ausnehmung ausgebildeten Gegenrastelement (26; 54; 55) des ersten Profilschienenstücks (2) ver- und entriegelbar ist.

12. Profilschiene nach einem der vorhergehenden Ansprüche, **dadurch gekennzeichnet, dass** das zweite Ende (4b) des Verbindungsstücks (4) einen zweiten stirnseitigen Anschlussbereich (6) zum Verbinden mit einem zweiten Profilschienenstück (3) aufweist, dass der zweite stirnseitige Anschlussbereich (6) in einer zweiten Anschlussebene (30) angeordnet ist, die einen zweiten Winkel (58) zu einer zweiten, zu einer Erstreckung des Verbindungsstücks (4) normalen Ebene (59) aufweist, und dass die zweite Anschlussebene (30) unter einem zweiten Winkel (58) bezüglich der zweiten normalen Ebene (59) des zweiten stirnseitigen Anschlussbereiches (6) zwischen 20° und 70°, bevorzugt zwischen 25° und 35° und besonders bevorzugt zwischen 28° und 32° verläuft.

13. Profilschiene nach Anspruch 12, **dadurch gekennzeichnet, dass** der zweite stirnseitige Anschlussbereich (6) als Steckelemente (13; 14; 53) und/oder als Rastelemente (12a; 12b; 47; 48; 50; 51) ausgebildete Vorsprünge aufweist, und dass die Steckelemente (13; 14; 53) und die Rastelemente (12a; 12b; 47; 48; 50; 51) senkrecht bezüglich der zweiten normalen Ebene (59) angeordnet sind.

14. Profilschiene nach Anspruch 12 oder 13, **dadurch gekennzeichnet, dass** die erste Anschlussebene (29) und die zweite Anschlussebene (30) parallel sind.

15. Profilschiene nach einem der vorhergehenden Ansprüche, **dadurch gekennzeichnet, dass** das Verbindungsstück (4) zumindest einen gekrümmten Abschnitt mit zumindest einem Radius (R) aufweist.

## Claims

1. Profile rail for a door guide of a vehicle, comprising
a first profile rail piece (2) with a first end face (S1) and with a second end face (S2), and
a connecting piece (4),
wherein the connecting piece (4) has a first end (4a) and a second end (4b),
wherein the first end (4a) of the connecting piece (4) has a first end-face connection region (5) for connecting to the first profile rail piece (2),
wherein the connecting piece (4) is configured as a separate profile rail piece, and
wherein the connecting piece (4) can be connected via the first end-face connection region (5) to at least one end face (S1; S2) of the first profile rail piece (2) by means of a plug-in system,
**characterized in**
**that** the connecting piece (4) comprises an upper connecting piece part (33) and a lower connecting piece part (34), and
**that** the upper connecting piece part (33) and the lower connecting piece part (34) can be connected to one another along a connecting line (35) extending, at least in sections, transversely with respect to the first end-face connection region (5).

2. Profile rail according to claim 1, **characterized in that** the upper connecting piece part (33) has an upper latching lug (43; 44; 50; 51), and that the lower connecting piece part (34) has a lower latching lug (40; 41; 47; 48).

3. Profile rail according to claim 2, **characterized in that** the upper latching lug (43; 44; 50; 51) and the lower latching lug (40; 41; 47; 48) are arranged in parallel to one another, and that the upper latching lug (43; 44; 50; 51) and the lower latching lug (40; 41; 47; 48) are arranged facing away from one another.

4. Profile rail according to one of the claims 1 to 3, **characterized in that** the upper connecting piece part (33) and the lower connecting piece part (34) are connected to one another by plugging.

5. Profile rail according to claim 4, **characterized in that** the upper connecting piece part (33) and the lower connecting piece part (34) can be plugged together along the connecting line (35) to form a unit by means of connecting-line plug-in elements (60) and by means of connecting-line latching elements (61) in a force-fitting and form-fitting manner.

6. Profile rail according to one of claims 1 to 5, **characterized in that** the upper connecting piece part (33) and the lower connecting piece part (34) are made of the same material.

7. Profile rail according to one of the claims 1 to 6, **characterized in that** the first profile rail piece (2) has, on a side (36) facing the vehicle, a hollow chamber (37) which is continuous at least in sections, that a slot recess (38) is formed in the hollow chamber (37), and that a threaded bolt (39) with a head piece (40) can be inserted into the hollow chamber (37).

8. Profile rail according to claim 7, **characterized in that** the hollow chamber (37) and the slot recess (38) extend in a longitudinal direction of the first profile rail piece (2).

9. Profile rail according to one of claims 1 to 8, **characterized in that** the first end-face connection region (5) is arranged in a first connection plane (29) which has a first angle (31) to a first plane (32) normal to an extension of the connecting piece (4), and that the first angle (31) between the first connection plane (29) and the first normal plane (32) extends between 20° and 70°, preferably between 25° and 35°, and particularly preferably between 28° and 32°.

10. Profile rail according to claim 9, **characterized in that** the first end-face connection region (5) has protrusions formed as plug-in elements (8; 9; 46) and latching elements (7a; 7b; 40; 41; 43; 44), and that the plug-in elements (8; 9; 46) and the latching elements (7a; 7b; 40; 41; 43; 44) are arranged perpendicularly with respect to the first normal plane (32).

11. Profile rail according to one of claims 1 to 10, **characterized in that** the connecting piece (4) has at least one latching element (7a; 12a; 40; 43; 47; 50) with a resilient, elastic latching lug (7b; 12b; 41; 44; 48; 51), and that the latching lug (7b; 41; 44) of the connecting piece (4) can be locked and unlocked with a counter latching element (26; 54; 55) formed as a recess in the first profile rail piece (2).

12. Profile rail according to one of the preceding claims, **characterized in that** the second end (4b) of the connecting piece (4) has a second end-face connection region (6) for connecting to a second profile rail piece (3), that the second end-face connection region (6) is arranged in a second connection plane (30) which has a second angle (58) to a second normal plane (59) normal to an extension of the connecting piece (4), and that the second connection plane (30) extends at a second angle (58) with respect to the second normal plane (59) of the second end-face connection region (6) between 20° and 70°, preferably between 25° and 35°, and particularly preferably between 28° and 32°.

13. Profile rail according to claim 12, **characterized in that** the second end-face connection region (6) has protrusions formed as plug-in elements (13; 14; 53) and/or as latching elements (12a; 12b; 47; 48; 50; 51), and that the plug-in elements (13; 14; 53) and the latching elements (12a; 12b; 47; 48; 50; 51) are arranged perpendicularly to the second normal plane (59).

14. Profile rail according to claim 12 or 13, **characterized in that** the first connection plane (29) and the second connection plane (30) are parallel.

15. Profile rail according to one of the preceding claims, **characterized in that** the connecting piece (4) has at least one curved portion with at least one radius (R).

## Revendications

1. Rail profilé pour le guidage d'une porte de véhicule, comprenant
une première pièce de rail profilé (2) avec une première face frontale (S1) et une deuxième face frontale (S2), et
une pièce de liaison (4),
la pièce de liaison (4) présentant une première extrémité (4a) et une deuxième extrémité (4b),
la première extrémité (4a) de la pièce de liaison (4) présentant une première zone de raccordement frontale (5) destinée à être reliée à la première pièce de rail profilé (2),
la pièce de liaison (4) étant réalisée sous la forme d'un élément de rail profilé séparé, et
la pièce de liaison (4) pouvant être reliée, par l'intermédiaire de la première zone de raccordement frontale (5), à au moins une face frontale (S1 ; S2) de la première pièce de rail profilé (2) au moyen d'un système d'enfichage,
**caractérisé en ce**
**que** la pièce de liaison (4) comprend une partie de liaison supérieure (33) et une partie de liaison inférieure (34), et
**que** la partie de liaison supérieure (33) et la partie de liaison inférieure (34) peuvent être reliées entre elles le long d'une ligne de liaison (35) s'étendant au moins par sections transversalement par rapport à la première zone de raccordement frontale (5).

2. Rail profilé selon la revendication 1, **caractérisé en ce que** la partie de liaison supérieure (33) présente un ergot d'encliquetage supérieur (43 ; 44 ; 50 ; 51) et que la partie de liaison inférieure (34) présente un ergot d'encliquetage inférieur (40 ; 41 ; 47 ; 48).

3. Rail profilé selon la revendication 2, **caractérisé en ce que** l'ergot d'encliquetage supérieur (43 ; 44 ; 50 ; 51) et l'ergot d'encliquetage inférieur (40 ; 41 ; 47 ; 48) sont disposés parallèlement l'un à l'autre, et que l'ergot d'encliquetage supérieur (43 ; 44 ; 50 ; 51) et l'ergot d'encliquetage inférieur (40 ; 41 ; 47 ; 48) sont disposés éloignés l'un par rapport à l'autre.

4. Rail profilé selon l'une des revendications 1 à 3, **caractérisé en ce que** la partie de liaison supérieure (33) et la partie de liaison inférieure (34) sont reliées entre elles par emboîtement.

5. Rail profilé selon la revendication 4, **caractérisé en ce que** la partie de liaison supérieure (33) et la partie de liaison inférieure (34) peuvent être assemblées le long de la ligne de liaison (35) pour former une unité par complémentarité de forme et par adhérence à l'aide d'éléments d'enfichage (60) de ligne de liaison et d'éléments d'encliquetage (61) de ligne de liaison.

6. Rail profilé selon l'une des revendications 1 à 5, **caractérisé en ce que** la pièce de liaison supérieure (33) et la pièce de liaison inférieure (34) sont fabriquées dans le même matériau.

7. Rail profilé selon l'une des revendications 1 à 6, **caractérisé en ce que** la première pièce de rail profilé (2) présente, sur un côté (36) tourné vers le véhicule, une chambre creuse (37) continue au moins par sections, qu'un évidement en forme de fente (38) est formé dans la chambre creuse (37), et qu'un boulon fileté (39) avec une tête (40) peut être inséré dans la chambre creuse (37).

8. Rail profilé selon la revendication 7, **caractérisé en ce que** la chambre creuse (37) et l'évidement en forme de fente (38) s'étendent dans un sens longitudinal de la première pièce de rail profilé (2).

9. Rail profilé selon l'une des revendications 1 à 8, **caractérisé en ce que** la première zone de raccordement frontale (5) est disposée dans un premier plan de raccordement (29), qui forme un premier angle (31) avec un premier plan normal (32) à une extension de la pièce de liaison (4), et que le premier angle (31) entre le premier plan de raccordement (29) et le premier plan normal (32) est compris entre 20° et 70°, de préférence entre 25° et 35°, et de manière particulièrement préférée entre 28° et 32°.

10. Rail profilé selon la revendication 9, **caractérisé en ce que** la première zone de raccordement frontale (5) présente des épaulements formés par des éléments d'enfichage (8 ; 9 ; 46) et des éléments d'encliquetage (7a ; 7b ; 40 ; 41 ; 43 ; 44), et que les éléments d'enfichage (8 ; 9 ; 46) et les éléments d'encliquetage (7a ; 7b ; 40 ; 41 ; 43 ; 44) sont disposés perpendiculairement au premier plan normal (32).

11. Rail profilé selon l'une des revendications 1 à 10, **caractérisé en ce que** la pièce de liaison (4) comporte au moins un élément d'encliquetage (7a ; 12a ; 40 ; 43 ; 47 ; 50) avec un ergot d'encliquetage (7b ; 12b ; 41 ; 44 ; 48 ; 51) et **en ce que** le nez d'encliquetage (7b ; 41 ; 44) de la pièce de liaison (4) peut être verrouillé et déverrouillé avec un élément d'encliquetage complémentaire (26 ; 54 ; 55) de la première pièce de rail profilé (2) formé comme un évidement.

12. Rail profilé selon l'une des revendications précédentes, **caractérisé en ce que** la deuxième extrémité (4b) de la pièce de liaison (4) présente une deuxième zone de raccordement frontale (6) destinée à être reliée à un deuxième pièce de rail profilé (3), que la deuxième zone de raccordement frontale (6) est disposée dans un deuxième plan de raccordement (30) qui forme un deuxième angle (58) avec un deuxième plan normal (59) à une extension de la pièce de liaison (4) , et que le deuxième plan de raccordement (30) forme un deuxième angle (58) par rapport au deuxième plan normal (59) de la deuxième zone de raccordement frontale (6) compris entre 20° et 70°, de préférence entre 25° et 35° et de manière particulièrement préférée entre 28° et 32°.

13. Rail profilé selon la revendication 12, **caractérisé en ce que** la deuxième zone de raccordement frontale (6) est conçue sous forme d'éléments enfichables (13 ; 14 ; 53) et/ou d'éléments d'encliquetage (12a ; 12b ; 47 ; 48 ; 50 ; 51), et que les éléments d'enfichage (13 ; 14 ; 53) et les éléments d'encliquetage (12a ; 12b ; 47 ; 48 ; 50 ; 51) sont disposés perpendiculairement au deuxième plan normal (59).

14. Rail profilé selon la revendication 12 ou 13, **caractérisé en ce que** le premier plan de raccordement (29) et le deuxième plan de raccordement (30) sont parallèles.

15. Rail profilé selon l'une des revendications précédentes, **caractérisé en ce que** la pièce de liaison (4) présente au moins une partie courbée avec au moins un rayon (R).
